Europäisches Patentamt

European Patent Office

Office européen des brevets

(19)

(11) Veröffentlichungsnummer: **0 019 275**

**A2**

(12) ## EUROPÄISCHE PATENTANMELDUNG

(21) Anmeldenummer: 80102685.7

(22) Anmeldetag: 14.05.80

(51) Int. Cl.³: **A 01 B 3/421**
**A 01 B 3/46, A 01 B 73/00**

(30) Priorität: 14.05.79 DE 2919362

(43) Veröffentlichungstag der Anmeldung:
26.11.80 Patentblatt 80/24

(84) Benannte Vertragsstaaten:
AT BE FR GB NL SE

(71) Anmelder: Steigerwald, Rudolf
Spitzwegring 7
D-8857 Wertingen(DE)

(72) Erfinder: Steigerwald, Rudolf
Spitzwegring 7
D-8857 Wertingen(DE)

(74) Vertreter: Prüfer Lutz H., Dipl.-Phys.
Willroiderstrasse 8
D-8000 München 90(DE)

(54) **Drehwerkvorrichtung mit Abstützvorrichtung, Kippausgleich und Klappeinrichtung des Pflugbaumes und Front-Hilfsstützrad an Pflügen.**

(57) Bei Drehpflügen soll der Wendevorgang vereinfacht und die Einsatzmöglichkeit vergrößert werden.

Zu diesem Zweck erfolgt die Drehung des Schwerpunktes beim Drehvorgang um die Wendewelle in Abhängigkeit einer annähernd horizontalen Schwenkbewegung des Pflugbaumes.

EP 0 019 275 A2

Fig.1

⊓⊓⊔⊏⊓⊏⊏⊓

PATENTANWALT DIPL.-PHYS. LUTZ H. PRÜFER · D-8000 MÜNCHEN 90

Rudolf Steigerwald, 8857 Wertingen

## Drehwerkvorrichtung mit Abstützvorrichtung, Kippausgleich und Klappeinrichtung des Pflugbaumes und Front-Hilfsstützrad an Pflügen

Die Erfindung bezieht sich auf ein Verfahren zur Durchführung des Drehvorganges bei Drehpflügen, die über ein Vordergestell mit einem Schlepper verbunden sind und der Pflugbaum mittels eines Hydraulikzylinders um eine mit dem Vordergestell verbundenen Wendewelle von einer Arbeitsstellung in die andere gedreht wird sowie auf eine Vorrichtung zur Durchführung des Verfahrens.

Die Erfindung bezieht sich ferner auf eine Drehantriebsvorrichtung für Drehpflüge, die mittels eines Hydraulikzylinders den Pflugbaum um eine mit dem Vordergestell verbundenen Wendewelle von einer Arbeitsstellung in die andere in einem durchgehenden Hubweg des Hydraulikzylinders dreht.

Ferner bezieht sich die Erfindung auf eine Abstützvorrichtung zur Entlastung des Pflugvorderteiles an Pflügen, wobei diese Abstützvorrichtung als Kippeinrichtung des Pflugbaumes und/ oder als dessen Drehwerkantrieb kombinierbar ist.

PATENTANWALT DIPL.-PHYS. LUTZ H. PRÜFER · D-8000 MÜNCHEN 90 · WILLROIDERSTR. 8 · TEL. (089) 640640

Schließlich bezieht sich die Erfindung auf ein Front-Hilfsstützrad an Pflügen, das vorzugsweise an Pflügen mit Kippeinrichtung des Pflugbaumes Verwendung findet, und eine Klappeinrichtung des Pflugbaumes an Pflügen, die vorzugsweise mit verschwenk- oder kippbarem Pflugbaum ausgerüstet sind.

Pflüge sollen trotz ihrer hohen Beanspruchung sowohl im Einsatz als auch während des Transportes möglichst leicht, variationsreich in der Bauweise und im Einsatz und entsprechend dem Einsatzzweck mit optimaler Funktion in der Arbeits- und Bedienungstechnik sein.

Die seither bekannten Pflüge und ihre Systeme weisen allerdings einige Nachteile auf. Bei Anbaudrehpflügen ist bis auf wenige Ausnahmen der Pflugbaum während der Drehung zur Drehachse fest fixiert, so daß einerseits große Schwungmomente frei werden und sinngemäß große Drehmomentkräfte erforderlich sind, um den Pflugbaum wieder in seine Arbeitsstellung zu drücken und andererseits der Drehradius an der Peripherie der hinteren Pflugteile relativ groß wird, was zu Drehstörungen und Beschädigungen führt, wenn der Pflug den Boden berührt. Diese schlechten Eigenschaften übertragen sich auf das Aushubgestänge des Schleppers und somit des Schleppers selbst und können auch hier Beschädigungen hervorrufen.

Bereits bekannte Systeme arbeiten im Prinzip entweder über Hintereinanderschaltung von einem Schwenkzylinder und einem Drehzylinder am Pflugbaum, oder einer Schwenkbewegung des Pflugbaumes in Abhängigkeit der Drehbewegung (DT-OS 23 60 739 und 24 13 331). Beide Systeme benötigen einen Drehzylinder, der einerseits am Pflugkopf und andererseits am drehbaren Teil des Pflugbaumes bzw. Drehrahmens angelenkt sein muß. Dies erfordert einen großen Freiraum zwischen dem Pflugbock und dem zu drehenden Rahmen. Die einzige Verbindung ist hierbei nur die Wendewelle bzw. deren Lagerung. Die Beanspruchung dieser Wendewelle ist deshalb sehr groß und muß in der Herstellung aufwendig und teuer gebaut werden. Trotzdem sind Beschädigungen und Brüche an dieser Stelle keine Seltenheit. Außerdem wird die Wendewelle durch den senkrecht stehenden Drehwerkszylinder während dem Nulldurchgang noch zusätzlich belastet. Als weiterer Nachteil ist die für die erfindungsgemäße Kippeinrichtung des Pflugbaumes zum Pflugbock hinderliche Anordnung des Drehwerkzylinders aufzuführen, indem stets eine Abstützung dieses Drehwerkzylinders zum Einschwenken des Pflugbaumes am Pflugbock notwendig ist.

Das bisher bekannte hydraulisch hintereinandergeschaltete Schwenk-Drehsystem hat die Nachteile, daß nur mit zwei Hydraulikzylindern, von denen mindestens der Schwenkzylinder in doppeltwirkender Ausführung sein muß, gearbeitet werden kann. Die stets erforderliche Hintereinanderschaltung der beiden Hydraulikzylinder, deren Umschaltung in der Regel über Überdruck erfolgt, bedingt eine zusätzliche Störanfälligkeit und Verteuerung. Außerdem wird durch die Umschaltung eine ruckartige Bewegung des Pflugbaumes und somit dessen Schwerpunktes von der Schwenk- zur Drehbewegung und umgekehrt erzeugt, was sich auf den gesamten Drehwerkmechanismus schädlich auswirkt. Wird bei dem Schwenksystem das Schwenklager des Pflugbaumes im Bereich der ersten Scharspitze verlegt, ist eine durch den Schwenkzylinder erreichbare Arbeitsbreiteneinstellung des Pfluges nur auf Umwegen möglich. Soll beispielsweise die Arbeitsbreite schmäler werden, muß der Pflugbaum zunächst in das zu pflügende Land geschwenkt werden, damit der gesamte Pflug durch die jetzt schräg stehenden Pflugkörper wieder in Richtung gepflügtem Land laufen und somit die Arbeitsbreite am ersten Pflugkörper kleiner werden kann. Diese verzögerte Schmalstellung hat den Nachteil, daß der z.B. wegen zu grossem Steinbesatz schlechter geführte Pflug am ersten Pflugkörper zunächst entweder noch breiter pflügt oder zu verzögert reagiert, so daß der erste Pflugkörper einige Meter noch schlechter arbeitet als zuvor, oder der gesamte Pflug wegen zu großer Seitenbelastung der Pflugkörperanlagen in das ungepflügte Land ausbrechen kann.

Das zweite System des Dreh-Schwenk-Pfluges (DT-OS 23 60 739 und 24 13 331) hat den Nachteil, daß eine Schnittbreiteneinstellung des ersten Pflugkörpers durch das Dreh-Schwenkwerk nicht möglich ist. Außerdem ist bei diesem System eine Drehung der vorderen Pflugkörper unter der Wendewelle hindurch nicht möglich, so daß eine Kombination der erfindungsgemäßen Kippeinrichtung des Pflugbaumes ausscheidet. Die bisher bekannten Anbaudrehpflüge konnten wegen ihrer Drehwerksantriebe nicht, wie bei den Beetpflügen (Einwegpflügen) bekannt, mit einer Abstützung zwischen Pflugbock und Pflugbaum ausgerüstet werden. Dies hat zur Folge, daß die gesamte Belastung des hinteren Pflugteiles von der Wendewelle aufgenommen werden muß und trotz aufwendiger und somit teurer Bauweise häufig der Übergangsbereich der Wendewelle zum Pflugbock die Schwachstelle bezüglich Beschädigung oder Bruch ist. Des weiteren ist die Anzahl der Pflugkörper bei Anbaudrehpflügen zum Teil wegen des obigen Grundes, aber zum großen Teil auch wegen des hohen Kippmomentes des Pflugschwerpunktes zur Schlepperhinterachse, in der Praxis begrenzt. So können in der Regel nur vierscharige und in Sonderfällen fünfscharige Anbaudrehpflüge vom Schlepper getragen werden. Bereits bei größeren Vierschar-Anbaudrehpflügen ist es keine Seltenheit, daß beim Einsatz in schweren Böden sogar große Schlepper mit Allradantrieb aufbäumen. Damit wird der gesamte Antrieb auf die Hinterachse verlagert, wofür sie nicht gebaut ist. Hierbei kann es zu Schäden im Differential oder Getriebe kommen, oder der Reifen dreht sich auf der Felge durch. Selbst wenn es nicht zu sofortigen Schäden des Hinterachsantriebes am Schlepper führt, ist der Verschleiß der relativ großen und teuren Hinterradreifen speziell bei Böden mit Steinbesatz sehr groß. Bei zu starker Entlastung der angetriebenen Vorderräder wird der Sinn und Zweck des allradgetriebenen Schleppers in Frage gestellt.

Anbaupflüge bekannter Art weisen bei welligem Gelände und beim Ausheben bzw. Einsetzen noch Nachteile auf, indem durch die nahezu parallele Führung des Aushubgestänges kein Knickwinkelausgleich vorhanden ist. Es wurden hierfür bereits Lösungen bekannt, konnten sich aber wegen ihres relativ hohen technischen Aufwandes gegenüber dem erzielten Nutzen in der Praxis nicht durchsetzen. Bei Anbaudrehpflügen ist dieser Knickausgleich bisher nur über Hydraulikzylinder möglich, die anstatt dem Oberlenker (obere Gelenkverbindung zwischen Schlepper und Pflugbock) eingesetzt sind (DT-OS 2 345 023). Außerdem haben alle bekannten Knickausgleichsysteme den Nachteil, daß man den Knickausgleich entweder ständig mit der Hand nachregeln, oder der Knickausgleich-Zylinder in Schwimmstellung sein muß. Ein Anbaupflug mit Schwimmstellung dieses Zylinders ist jedoch widersinnig, weil die für den Anbaupflug spezifische Übertragung der Tragkraft auf den Schlepper verloren geht.

Die Überbelastung des Schleppers tritt nicht nur bei eingesetztem, sondern auch bei ausgehobenem Anbaupflug auf. Durch den zwangsläufig großen Abstand des Pflugschwerpunktes zur Schlepperhinterachse bauen sich große Schwungmomente auf, wenn Bodenunebenheiten überfahren werden. Diese Kräfte können die statischen um ein vielfaches überschreiten und führen deshalb zu starker Überbelastung sowohl der Wendewelle als auch des gesamten Schlepperhubgestänges einschließlich der Hubhydraulik. Bei längeren Transportfahrten erhöht sich daraufhin die Temperatur des Hydrauliköles, die Viskosität nimmt ab und ein ständiges Nachregeln ist die Folge, weil die Lecköllverluste ständig größer werden. Die Öltemperatur nimmt deshalb noch mehr zu. Dieser Regelkreis kann sich so nachteilig auswirken, daß sich Öldampfblasen bilden und die Steuerkanten im Regelventil bzw. die Hydraulikpumpe beschädigt werden. Eine Reparatur ist somit unumgänglich.

Im Straßenverkehr wirken sich die langen Abmessungen von größeren Pflügen besonders hinderlich und zum Teil gefährlich aus. Durch den großen Schwerpunktabstand der Pflüge zur Schlepperhinterachse wird die Vorderachse stark entlastet, und die Lenkfähigkeit des Schleppers kann nur über Frontgewichte wieder verbessert werden. Hier sind jedoch Grenzen gesetzt, da Frontgewichte einen vorgeschriebenen Gewichtswert und die Hinterachslast einen maximal zulässigen Belastungswert nicht überschreiten dürfen. Die langen Abmessungen der freigetragenen Anbaupflüge haben im Straßenverkehr schon zu zahlreichen Unfällen geführt, speziell beim Abbiegen von oder in die Straße.

Aufgabe der Erfindung ist es, ein Verfahren der eingangs beschriebenen Art und eine Vorrichtung zur Durchführung des Verfahrens zu schaffen, durch welches die Anwendung und Ausbildung von Drehpflügen wesentlich verbessert wird und die Anzahl der Pflugkörper bei Anbaupflügen gegenüber bekannten Pflügen erhöht werden kann.

Es sollen die Vorteile des Anbaupfluges gegenüber dem Aufsattelpflug - hohe Wendigkeit und günstiger Anschaffungspreis - mit den Vorteilen des Aufsattelpfluges gegenüber dem Anbaupflug - gute Anpassung des Pfluges bei welligem Gelände, gute Einsetz- und Aushubeigenschaften am Feldrand (schräges Ein- und Ausfahren der Pflugkörper) und günstige Transporteigenschaften bezüglich Gewichtsverlagerung auf den Schlepper und gute Kurvenfahrt - kombiniert werden. Darüberhinaus soll die bei eingesetztem Pflug zu übertragende Tragkraft auf den Schlepper entsprechend des verwendeten Schleppers optimal einstellbar sein.

Diese Aufgabe wird durch ein Verfahren der eingangs beschriebenen Art gelöst, welches gemäß der Erfindung dadurch gekennzeichnet ist, daß die Drehung des Schwerpunktes um die Wendewelle in Abhängigkeit einer annähernd horizontalen Schwenkbewegung des Pflugbaumes erfolgt.

Die Vorrichtung zur Durchführung des Verfahrens ist gemäß der Erfindung dadurch gekennzeichnet, daß der Pflugbaum am Ende der Wendewelle schwenkbar gelagert und am vorderen Ende über Rollenmittel oder Gleitelemente am Pflugkopf befestigtem Führungselement verschiebbar ist und dessen Führungsrichtung zur Wendewelle entweder unmittelbar unterhalb oder oberhalb vorbei verläuft.

Es wird ein Schwenk-Drehsystem mit handbetätigter Umschaltung der Hydraulik geschaffen. Der Pflugbaum ist am Ende der Wendewelle schwenkbar gelagert und wird über einen liegenden Hydraulikzylinder, der einerseits am Pflugbaum und andererseits entweder am Pflugkopf, Pflugbock oder an der Wendewelle angelenkt ist, in die Fahrtrichtung geschwenkt, wobei der vordere Teil des Pflugbaumes von einer annähernd waagrechten Führung an der Wendewelle entweder unmittelbar unterhalb oder oberhalb vorbeigeführt wird. Dadurch ist in einem einzigen Hydraulikzylinder eine Schwenk- und Drehbewegung möglich und es wird eine günstige Drehkinematik erreicht, indem der Schwerpunkt des Pflugbaumes vor der Drehung in den Bereich der Drehachse geschwenkt wird. Aufgrund der primären Schwenkbewegung des Drehwerkzylinders ist eine Schnittbreitenkorrektur des Pfluges während der Fahrt durchführbar. Bei entsprechend ausgebildetem Führungsmittelteil für das Pflugbaumvorderteil kann eine Drehung des Pflugbaumes über oder unter der Drehwelle gewählt werden. Das Drehwerk kann flach gebaut werden, und eine Verbindung des Drehwerkes zum Pflugbock ist nicht erforderlich. Somit ist eine gute Voraussetzung für die Kombination der erfindungsgemäßen Kippeinrichtung des Pflugbaumes gegeben bzw. wirkt diese bei entsprechender Anlenkung des Hydraulikzylinders am Pflugbock gleichzeitig als Kippeinrichtung oder als Unterstützung.

Das Führungselement der Vorrichtung kann in mindestens drei Führungsteile geteilt sein, und die äußeren Führungsteile können am Übergangsbereich zum Führungsmittelteil vertikal drehbar am Pflugkopf gelagert sein. Das Führungsmittelteil kann kreisförmig ausgebildet und der Krümmungsmittelpunkt entweder oberhalb oder unterhalb symmetrisch zur Wendewellendrehachse angeordnet sein. Es kann ein doppelt wirkender
hydraulischer Schwenk-Drehzylinder symmetrisch einerseits
am Flugbaum und andererseits an oder in der Drehwelle angelenkt sein.

Gemäß der Erfindung wird eine Drehantriebsvorrichtung für
Drehpflüge geschaffen, die mittels eines Hydraulikzylinders
den Pflugbaum um eine mit dem Vordergestell verbundenen
Wendewelle von einer Arbeitsstellung in die andere in einem
durchgehenden Hubweg des Hydraulikzylinders dreht. Diese
ist dadurch gekennzeichnet, daß der Hydraulikzylinder einerseits am Pflugkopf oder Pflugbock und andererseits an einem
Rollenmittelpaar mit einem flexiblen Zugmittel angelenkt ist
und dessen unbewegliche Enden in entgegengesetzter Richtung
am Pflugkopf oder Pflugbock befestigt sind, und das Rollenmittelpaar gegenläufig umschlingt und in entgegengesetzter
Richtung über Umlenkrollenmittel entweder an einem Abrollelement, das drehfest mit dem Pflugbaum oder der Drehwelle
verbunden ist, oder an einem am vorderen Ende des Pflugbaumes drehbar gelagerten Mitnehmer befestigt ist.

Dadurch wird erreicht, daß der Pflugbaum mit einem durchgehenden Hubweg des hydraulischen Schwenk-Drehzylinders von
einer Arbeitsstellung in die andere gedreht werden kann. Ein
Umschalten des hydraulischen Steuerventiles über die gesamte
Drehbewegung ist nicht erforderlich. Das Drehwerk ist durch
die günstigen Antriebseigenschaften unkompliziert, preisgünstig und störunanfällig. Die Drehantriebsvorrichtung eignet
sich besonders für Aufsatteldrehpflüge. Die bei Aufsattelpflügen auftretende größere Belastung ist hier durch die
Kräfteverteilung im Bereich des Pflugkopfes günstig, da
stets ein Kräftedreieck gebildet wird zwischen Wendewelle
(Zugkraft), Pflugbaumführung am Pflugkopf (Torsion) und
Zugmittel für die Schwenk-Drehbewegung. Außerdem kann das
Schwenk-Drehwerk für den Transport gleichzeitig als Hilfslenkung verwendet werden. Bei Verwendung eines Abrollelementes eignet sich dieses besonders für Standard-Drehpflüge. Durch die unterschiedlichen Durchmesser des Abrollelementes kann die Belastung des Drehwerkzylinders über dem gesamten Drehvorgang nahezu konstant gehalten und somit gut ausgenutzt werden, obwohl die Drehmomentkennlinie des Pflugbaumschwerpunktes sinusförmig verläuft. Die Drehbeschleunigung des Pflugbaumschwerpunktes bleibt deshalb konstant, d.h. die Drehgeschwindigkeit hat zu Beginn und am Ende ihr Minimum und in der Mitte ihr Maximum ohne Unterbrechung, so daß der Drehvorgang äußerst ruhig und somit drehwerksschonend abläuft. Des weiteren ist die Drehrichtung des Pflugbaumes um die Wendewelle wählbar, indem das flexible Zugmittel auf die gegenüberliegende Seite des Abrollelementes gelegt wird. Es braucht keine Rücksicht genommen werden, ob zuerst Fall- und dann Antriebsdrehung folgt oder umgekehrt. Zusätzlich ist auf einfache Art und Weise eine automatische Drehwerksentriegelung durch Ingangsetzen des Drehwerkzylinders erreichbar. Bei Verwendung eines doppeltwirkenden Schwenk-Drehzylinders kann eine Seite an einem Hydro-Speicher angeschlossen werden, so daß schlepperseitig ein einfachwirkendes Hydraulik-Steuerventil ausreicht. Dasselbe ist erreichbar, wenn anstatt dem Hydrospeicher eine entsprechend ausgebildete Rückholfeder eingesetzt wird. In diesem Fall ist nur ein einfachwirkender Schwenk-Drehzylinder erforderlich.

Bei der Drehantriebsvorrichtung kann das Rollenmittelpaar zur Hubrichtung des Hydraulikzylinders zusätzlich in seitlicher Richtung freibeweglich geführt sein. Es kann ein Hydrospeicher an dem doppeltwirkenden Schwenk-Drehzylinder entweder an der Zugkraft- oder Druckkraftseite angeschlossen sein, oder ein einfachwirkender Schwenk-Drehzylinder mit einer der hydraulischen Kraft entgegenwirkenden Feder kombiniert sein.

Ferner wird eine Abstützvorrichtung zur Entlastung des Flugvorderteiles an Pflügen, vorzugsweise an Anbaudrehpflügen, geschaffen. Diese ist gemäß der Erfindung dadurch gekennzeichnet, daß mindestens ein Verbindungselement zwischen dem Pflugbock und/oder dem Pflugkopf und entweder der Drehwelle oder dem Pflugbaum verbunden oder angelenkt ist. Entsprechend des Verwendungszweckes ist ein Kipplager waagrecht und quer zur Drehwellenachse zwischen Pflugbock und Pflugkopf vorhanden. Bei Verwendung eines hydraulischen Kippzylinders ist diesem ein Hydro-Speicher oder/und ein Drosselrückschlagventil vorgeschaltet. Dem hydraulischen Kippzylinder ist bei Verwendung eines zusätzlichen Drehwerkzylinders eine hydraulische Schalteinrichtung zwischengeschaltet, die den Kippvorgang nach einem bestimmten Kippweg entweder unterbricht und den Drehvorgang einleitet oder den Drehvorgang parallel oder synchron zuschaltet und umgekehrt. Ein hydraulischer Kippzylinder kann gleichzeitig als Drehwerk verwendet werden, indem dieser einerseits am Pflugbock oder Pflugkopf symmetrisch zur Wendewellenhöhenachse und andererseits am Pflugbaum symmetrisch und asymmetrisch zur Wendewellenlängsachse angelenkt ist. Die Abstützvorrichtung am Pflugbaum kann über einen Zwischenhebel oder in einem Langloch so angelenkt sein, daß der Anlenkpunkt asymmetrisch zur Wendewellenquerachse und entsprechend der Wenderichtung entweder oberhalb oder unterhalb der Symmetrieachse des Pflugbaumes ist.

Dadurch wird erreicht, daß durch die Abstützvorrichtung, die ihrem Verwendungszweck entsprechend entweder als einfache Strebe oder Strebe mit Ausgleichsfeder oder Hydraulikzylinder ausgebildet sein kann, stets der Pflugkopfbereich, insbesondere der Übergang der Wendewelle vom drehbaren Teil zum Pflugkopf entscheidend entlastet wird. Es kann deshalb dieser Bereich preisgünstiger gebaut bzw. die gefürchteten Schäden oder Brüche können vermindert oder ganz ausgeschaltet werden. Die Kippeinrichtung ermöglicht insbesondere bei Verwendung eines hydraulischen Kippzylinders als Abstützvorrichtung ein gutes Einsetzen bzw. Ausheben des Anbaudrehpfluges am Feldrand, indem die Pflugschare einzeln hintereinander einsetzen bzw. ausfahren. Die unerwünschten ungepflügten Dreiecke am Feldrand, die sich besonders beim Querpflügen des Feldrandes nachteilig auswirken, entfallen. Das schräge Einfahren der Pflugschare hat noch den zusätzlichen Vorteil, daß der Einzugswinkel der Pflugschare steiler wird, was bei schweren Böden besonders wichtig ist, damit der Pflug schneller seine Soll-Arbeitstiefe erreicht.

Die Kippeinrichtung ist mit einem Wendewerk kombinierbar und erlaubt ein Hochkippen des Pflugbaumes bis in den Bereich der Senkrechten. Es erhöht die Wendigkeit des Schleppers beim Wenden bzw. Transport entscheidend. Die Lenkfähigkeit des Schleppers steigt, das Querschwungmoment, das durch Unebenheiten oder Kurvenfahrt hervorgerufen wird, sinkt, das gefährliche Ausschwenken des Pflugbaumes, speziell bei Straßenfahrt, entfällt.

Bei Verwendung eines Kippzylinders und eines vorgeschalteten Hydro-Speichers kann die gewünschte oder erforderliche Übertragung der Tragkraft vom eingesetzten Pflug auf den Schlepper genau vorbestimmt werden. Der Anbaupflug paßt sich jeder Bodenunebenheit ohne hydraulische Nachregelung an und erreicht somit die Vorteile eines Anhänge- bzw. Aufsattelpfluges. Der Schlepper gräbt sich während des Pflügens nicht mehr ein, was bei schweren Böden speziell im Moment des Anhebens des Anbaupfluges durch die Regelhydraulik der Fall sein kann. Die Achslastverteilung des Schleppers bleibt entsprechend der eingestellten Tragkraftübertragung nahezu konstant, so daß allradgetriebene Schlepper ihre optimale Zugkraft beibehalten. Außerdem ist für das Heckstützrad eine Überbelastung, wie dies bisher noch möglich war, wenn z.B. der Schlepper mit der Hinterachse in eine Vertiefung fährt, auszuschließen.

Ein Drosselrückschlagventil, speziell in Kombination mit einem Hydro-Speicher, dämpft die Längsschwungmomente des Anbaupfluges.

Die Verwendung des Kippzylinders als gleichzeitiger Drehwerkantrieb ermöglicht eine einfache und preisgünstige Bauweise, speziell für Standardpflüge, und zwar mit dem besonderen Merkmal, daß mit einem einzigen Hydraulikzylinder die wesentlichen Vorteile der bereits beschriebenen Kippeinrichtung und ein Drehwerkantrieb erreicht werden. Ein weiterer Vorteil ist bei Anlenkung des Kippzylinders oberhalb der Wendewelle, daß der Drehantrieb nicht von der Förderleistung der Hydraulikpumpe des Schleppers abhängt. Das Drehwerk braucht deshalb nicht mehr nach den häufig recht unterschiedlichen Förderleistungen der Schlepperhydraulik ausgelegt werden. Die Drehkinematik bleibt stets konstant.

Die hydraulische Schaltkombination zwischen Kipp- und Drehwerkzylinder ermöglicht eine schnelle und fehlerfreie Bedienung. Entsprechend der gewählten oder vorhandenen hydraulischen Anschlußmöglichkeit am Schlepper wird ohne umschalten zu müssen der Pflugbaum gekippt und in die erforderliche Stellung gedreht. Das verhindert einerseits Fehlschaltungen, d.h. das vordere obere Schar kann durch zu hohes Kippen des Pflugbaumes nicht den Schlepper beschädigen, und andererseits kann sich der Schlepperfahrer voll auf sein Fahrzeug konzentrieren. Dies ist gerade am Feldrand wichtig, da der Schlepper gleichzeitig gewendet wird.

Die wegabhängige Schaltkombination hat gegenüber der Überdruckschaltung den Vorteil, daß sich keine Druckspitzen in der Hydraulikanlage aufbauen und keine ruckartigen Bewegungswechsel ausgelöst werden.

Falls eine hydraulische Umschaltung nach halbem Drehvorgang des Pflugbaumes und eine Totpunkt-Dreh-Hilfseinrichtung erforderlich ist, kann diese auf einfache Art und Weise durchgeführt werden. Diese Dreh-Hilfseinrichtung ist bei jedem System einbaubar, das mit einem Hydraulikzylinder als Abstützvorrichtung arbeitet.

Für die sichere Funktion der Dreh-Hilfseinrichtung ist es unerheblich, ob der Schwerpunkt des Pflugbaumes zuerst angehoben wird und sich dann über die Eigenenergie weiterdreht, oder umgekehrt.

Der hydraulische Kippzylinder ist vorzugsweise am Pflugbock oder Pflugkopf symmetrisch zu der Wendewellenhöhenachse und am Pflugbaum symmetrisch und asymmetrisch zu der Wendewellenlängsachse angelenkt. Ein Federelement ist symmetrisch einerseits am Pflugbaum und andererseits an der Drehwelle angreifend ausgebildet. Es kann ein Dämpfungszylinder dem Federelement parallelgeschaltet am Pflugbaum und an der Drehwelle angreifend vorgesehen sein.

Ferner schafft die Erfindung ein Front-Hilfsstützrad an Pflügen, vorzugsweise an Anbaupflügen mit Kippeinrichtung des Pflugbaumes, welches gemäß der Erfindung dadurch gekennzeichnet ist, daß ein Laufrad in nachlaufender Stellung am Pflugvorderteil angelenkt ist und ein Hydro-Zylinder oder Federbein so angelenkt ist, daß die Wirkungslinie des Hydro-Zylinders oder Federbeins bei eingesetztem Pflug unmittelbar im Bereich des Anlenkpunktes der Stützradstrebe vorbeiläuft und bei ausgehobenem Pflug durch das ausschwenkende Laufrad sich der Hebelarm dieser Wirkungslinie vergrößert. Dadurch wird insbesondere erreicht, daß Anbaupflüge im eingesetzten Zustand ihre Tragkraft nahezu voll auf den Schlepper übertragen und während dem Ausheben zum größten Teil von dem Front-Hilfsstützrad getragen werden. Die bisher übliche, maximale Scharenzahl von Anbaupflügen kann erhöht werden, ohne den Schlepper bei ausgehobenem Pflug zu überlasten und seine Lenkfähigkeit zu beeinträchtigen. Es kann somit der weitaus wendigere und preisgünstigere Anbaupflug in den Fällen eingesetzt werden, in denen bisher bereits Aufsattelpflüge notwendig waren.

Ferner wird eine Klappeinrichtung des Pflugbaumes in Anbaupflügen, vorzugsweise an Anbaupflügen mit verschwenk- oder kippbarem Pflugbaum, geschaffen, die gemäß der Erfindung dadurch gekennzeichnet ist, daß der Pflugbaum über eine Schwenkachse, die parallel zu den Pflugkörpern angeordnet ist, seitlich ausschwenkbar und mittels einer Arretiereinrichtung feststellbar ist. Dadurch wird der Vorteil erzielt, daß für den Transport der Schwerpunkt des Anbaupfluges näher zum Schlepper rückt und das im Straßenverkehr besonders beim Abbiegen gefährliche Ausschwenken der hinteren Pflugteile reduziert und die vorgeschriebenen Abmessungen sowohl in der Breite als auch in der Höhe einzuhalten. Aufgrund der günstigeren Schwerpunktverhältnisse des Anbaupfluges wird nicht nur die Hydraulikanlage geschont, sondern auch die Lenkfähigkeit des Schleppers günstiger, was sich besonders bei schneller Straßenfahrt vorteilhaft auswirkt, da kaum noch Querschwungmomente auftreten. Bei entsprechender Kombination zwischen klapp-, kipp- oder verschwenkbarer Ausführung des Pflugbaumes ist das Hubgestänge des Schleppers vollständig absenkbar, so daß die Hydraulikanlage völlig drucklos ist.

Weitere Merkmale und Zweckmäßigkeiten der Erfindung ergeben sich aus der Beschreibung von Ausführungsbeispielen anhand der Figuren. Von den Figuren zeigen:

Fig. 1    im Aufriß einen Anbaudrehpflug, kombiniert mit Schwenk-Drehvorrichtung, verschiedene hydraulische Abstützvorrichtungen, Kippeinrichtung, Dreh-Hilfseinrichtung und Front-Hilfsstützrad in Arbeitsstellung;

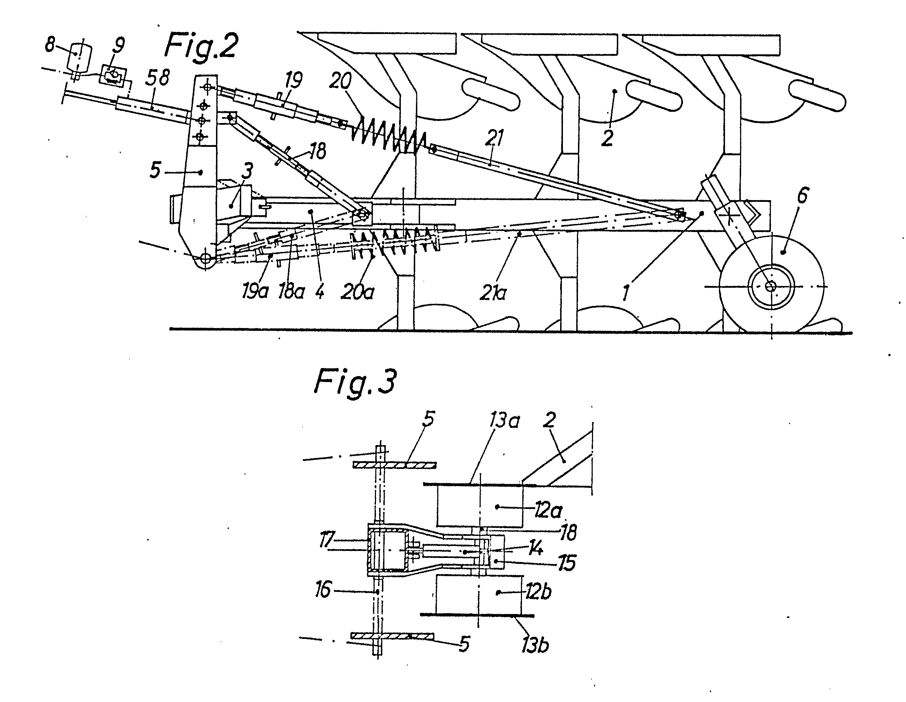

Fig. 2    im Aufriß einen Anbaudrehpflug, kombiniert mit Schwenk-Drehvorrichtung, hydraulische Kippeinrichtung und verschiedene mechanische Abstützvorrichtungen in Arbeitsstellung;

Fig. 3    im Grundriß (Schnitt) das Front-Hilfsstützrad;

Fig. 4    im Grundriß einen Anbaudrehpflug, kombiniert mit Schwenk-Drehvorrichtung, hydraulischer Abstützvorrichtung, Kippeinrichtung und Dreh-Hilfseinrichtung;

Fig. 5    wie Fig. 4, jedoch Schwenk-Drehvorrichtung unmittelbar vor der Drehung;

Fig. 6    im Seitenriß (Schnitt) Pflugbock mit Pflugkopf und Führung der Schwenk-Drehvorrichtung;

Fig. 6a    den Schwerpunktablauf des Pflugbaumes in Drehrichtung;

Fig. 7    wie Fig. 4 und 5, jedoch im Aufriß und nach halber Drehung des Pflugbaumes;

Fig. 8    wie Fig. 7, jedoch im Grundriß;

Fig. 8a und 8b    Varianten der Dreh-Hilfseinrichtung;

Fig. 9    im Grundriß einen Aufsatteldrehpflug mit Schwenk-Drehvorrichtung und in einem Arbeitsgang durchgehender Drehung;

Fig. 9a    im Seitenriß (Schnitt) den Pflugkopf von Fig. 9;

Fig. 10    wie Fig. 9, jedoch in entgegengesetzter Arbeitsstellung;

Fig. 11    im Seitenriß von Fig. 9 mit Führung der Schwenk-Drehvorrichtung;

Fig. 11a    den Schwerpunktablauf des Pflugbaumes in Drehrichtung;

Fig. 12    im Seitenriß den Pflugkopf eines Anbaudrehpfluges mit Abrollelement;

- 16 -

0019275

| Fig. 13 | im Aufriß einen Aufsatteldrehpflug wie in Fig. 9 und 10, jedoch in Transportstellung; |

Fig. 13  im Aufriß einen Aufsatteldrehpflug wie in Fig. 9 und 10, jedoch in Transportstellung;

Fig. 14  wie Fig. 13, jedoch im Grundriß;

Fig. 15  im Aufriß einen Anbaudrehpflug wie in Fig. 1, jedoch in Ausfahrtstellung aus der Furche;

Fig. 16  wie Fig. 15, jedoch in Kippstellung und unmittelbar vor der Drehung;

Fig. 16a, b, c  Varianten von hydraulischen Schaltkombinationen (Schaltbild) in Stellung des Pflugbaumes wie Fig. 16;

Fig. 17  wie Fig. 16, jedoch in maximal gekippter und ausgehobener Stellung des Pfluges mit halber Drehung des Pflugbaumes;

Fig. 18  wie Fig. 15, jedoch in Einfahrstellung in die Furche;

Fig. 18a, b, c  wie Fig. 16a, b, c, jedoch in Arbeitsstellung des Pfluges;

Fig. 19  im Aufriß einen Anbaudrehpflug, kombiniert mit hydraulischer Abstützvorrichtung und zusätzlichem Abstützzylinder;

Fig. 19a  das Kippmomentdiagramm zu Fig. 19;

Fig. 20  im Aufriß (Schnitt) den Pflugbock und Pflugkopf von Fig. 19;

Fig. 21  wie Fig. 19, jedoch mit starrer Anlage anstatt dem zusätzlichen Abstützzylinder und nach halber Drehung;

Fig. 21a  das Drehdiagramm zu Fig. 21;

Fig. 22    im Seitenriß (Schnitt) den Pflugbock und Pflugkopf von Fig. 21;

Fig. 23    Variante von Fig. 17, jedoch mit zusätzlichem
           Abstützzylinder;

Fig. 23a   Varianten von Fig. 8a und 8b für Fig. 23 bis
und  23b   Fig. 27;

Fig. 24    im Aufriß und

Fig. 25    im Grundriß von Fig. 23;

Fig. 26
und  27    Darstellungen der Erfindung im Detail;

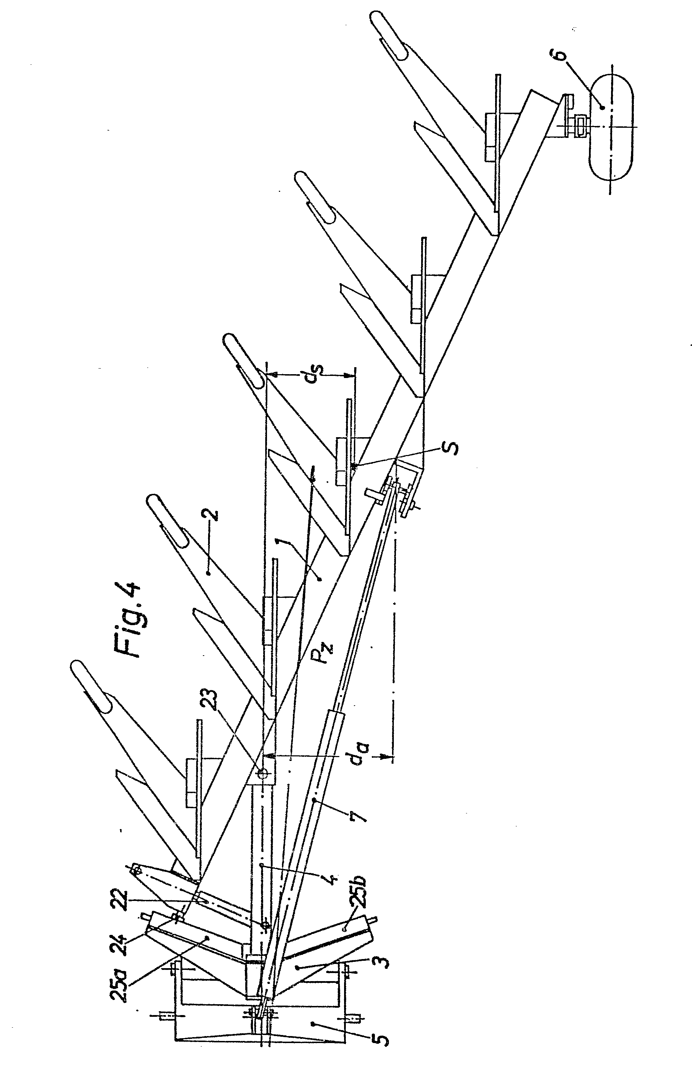

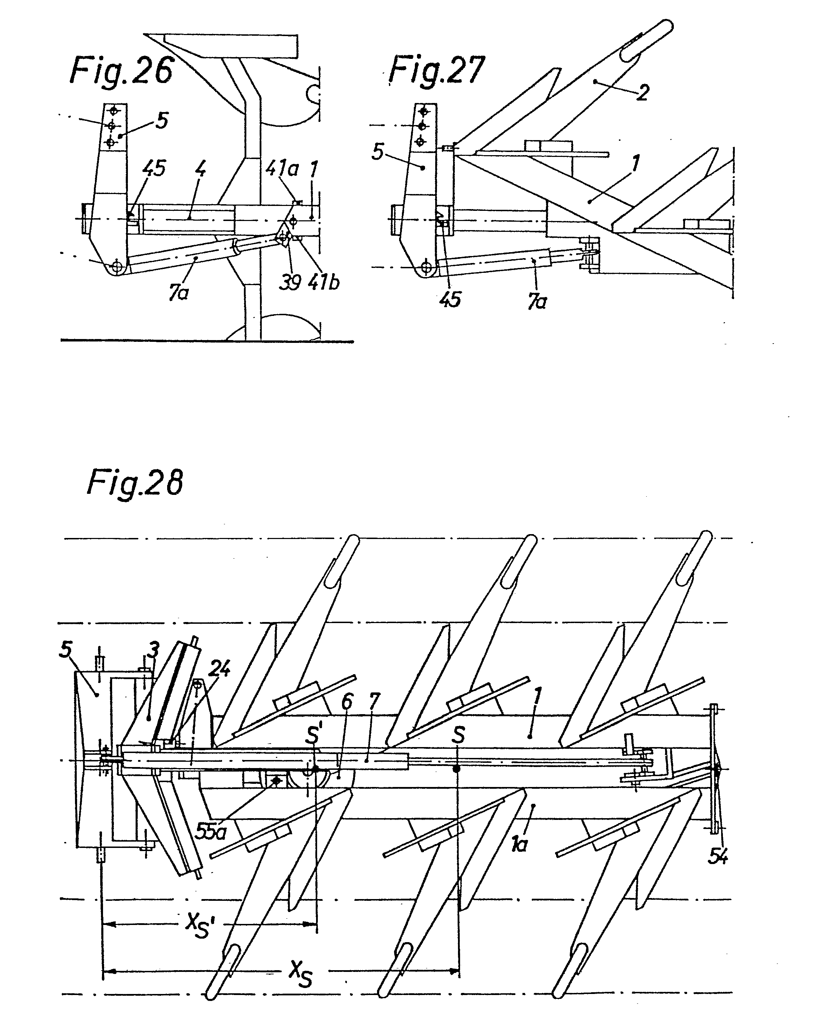

Fig. 28    im Grundriß die Klappeinrichtung des Pflugbaumes nach Fig. 4 bis Fig. 8;

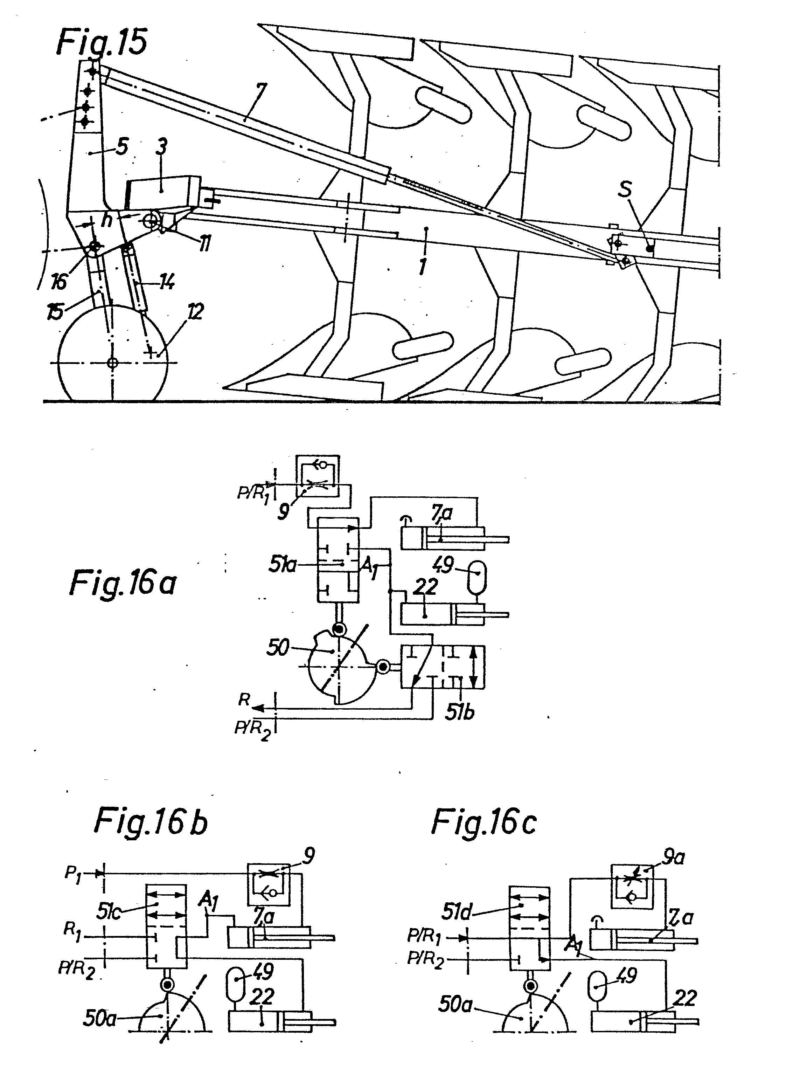

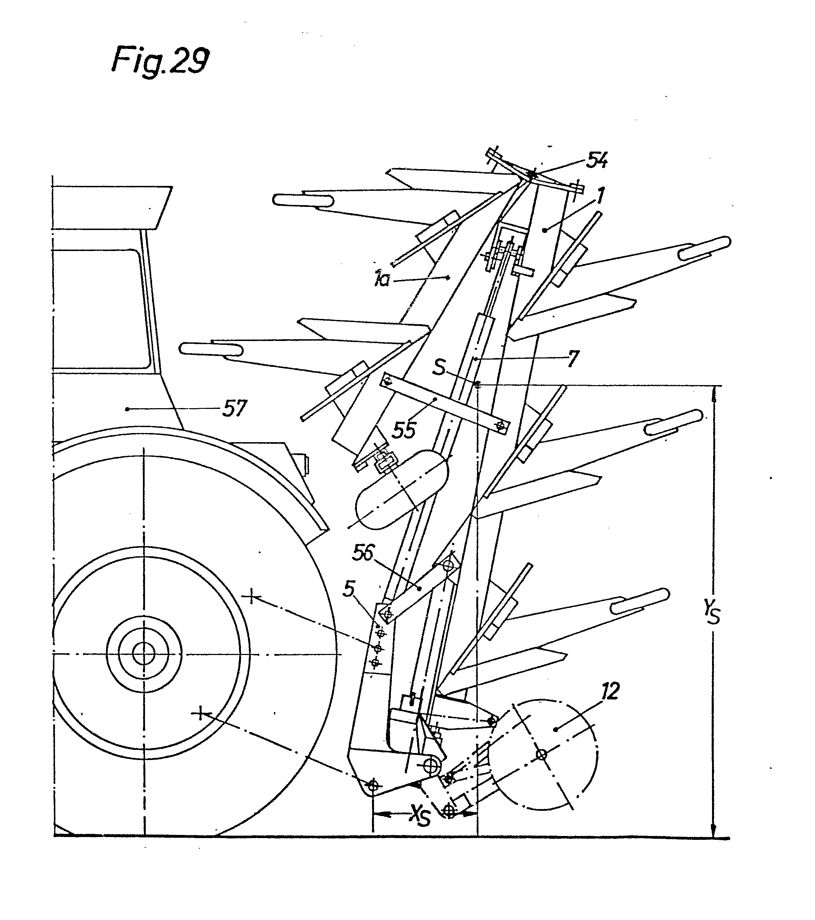

Fig. 29    im Aufriß eine Variante der Klappeinrichtung
           nach Fig. 15 bis Fig. 18; und

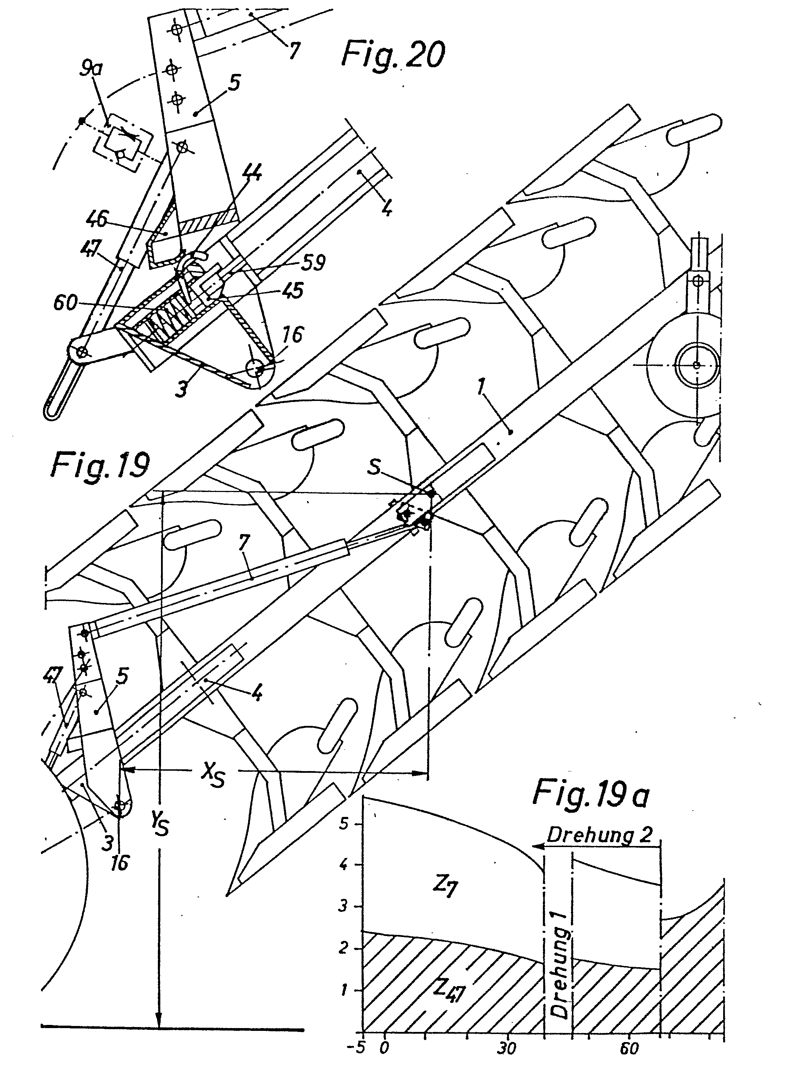

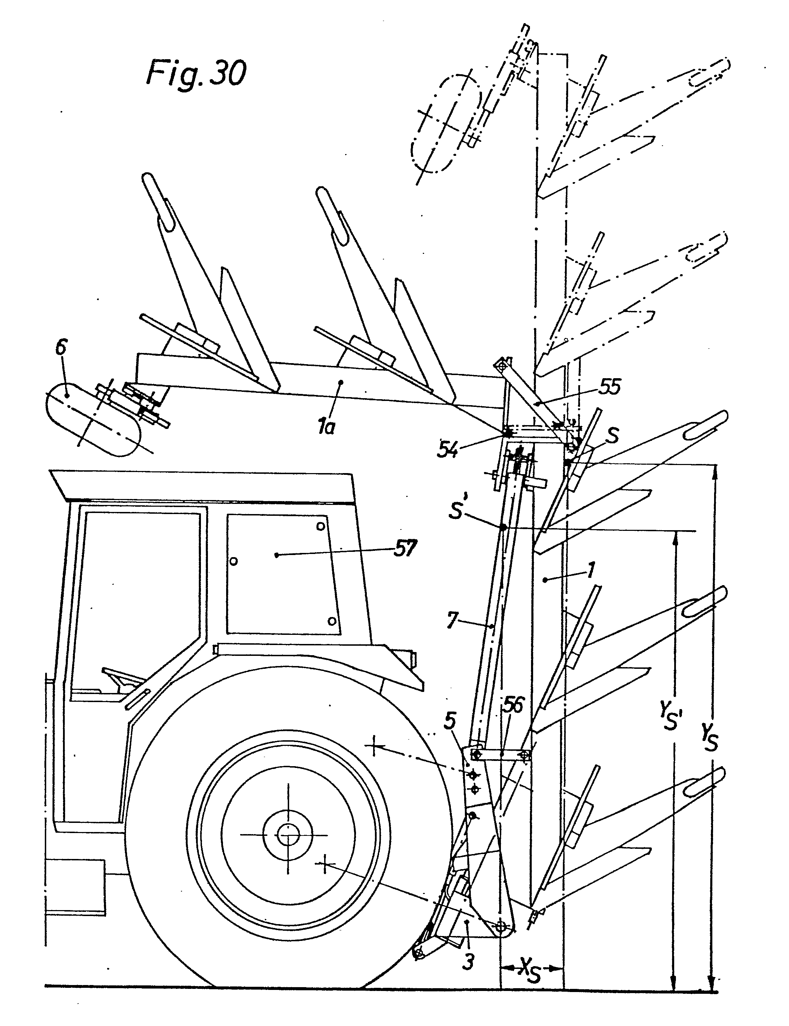

Fig. 30    im Aufriß eine Variante der Klappeinrichtung
           nach Fig. 19 bis Fig. 20.

A) Schwenk-Drehverfahren

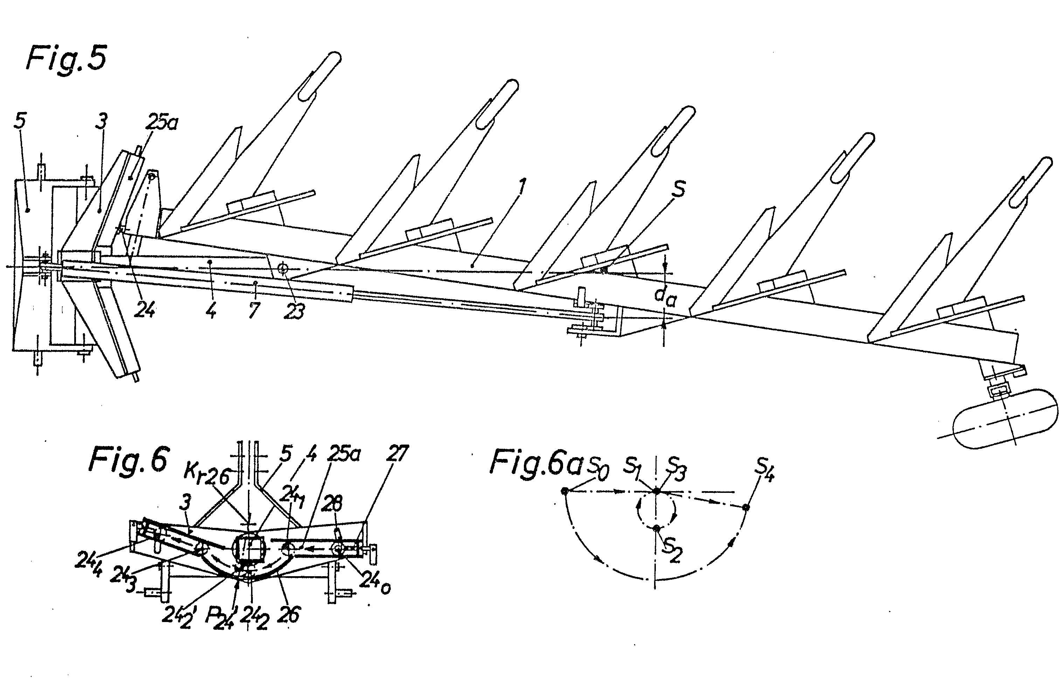

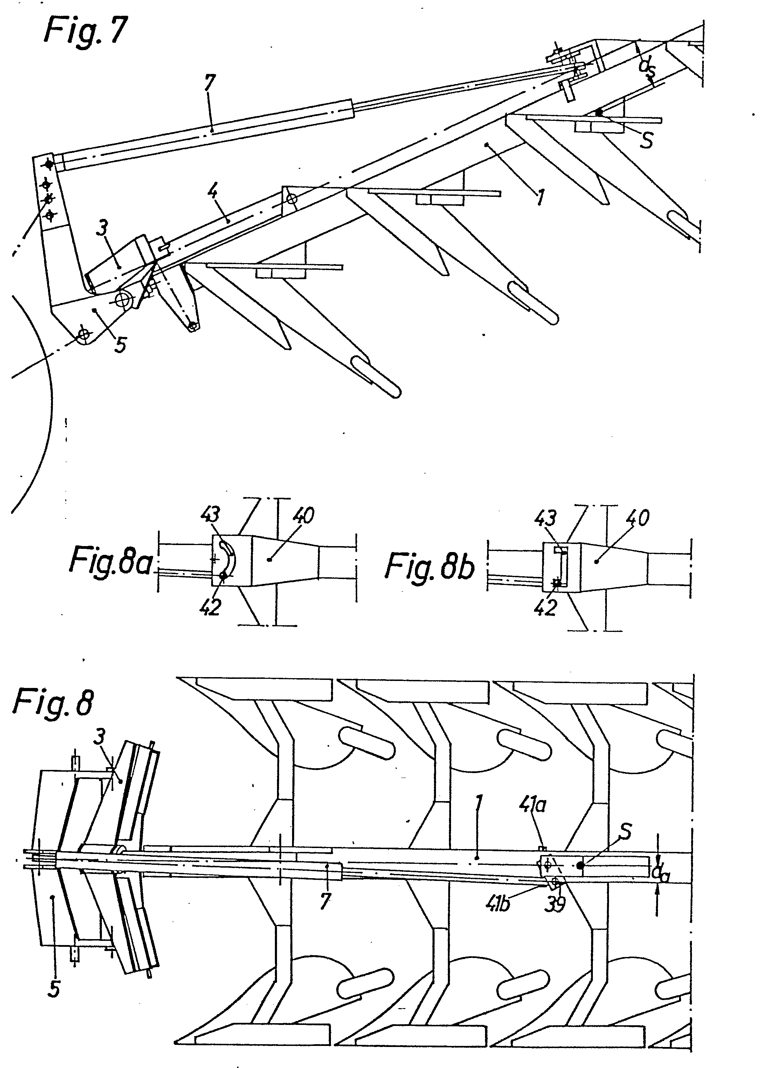

Der Pflugbaum 1 ist am Ende der Drehwelle 4 über ein Lager 23 parallel zu den Pflugkörpern 2 schwenkbar gelagert und liegt am vorderen Ende des Pflugbaumes 1 über eine Rolle 24 in einer quer und leicht v-förmig zur Wendewelle 4 verlaufenden u-förmigen Führung 25a, b und 26 und wird von einem waagrecht liegenden Hydraulikzylinder 22, der einerseits in der Wendewelle 4 und andererseits im Pflugbaum 1 am vorderen Ende gelagert ist, in seiner Arbeitsstellung gehalten oder gegen einen Anschlag 27 gespreizt. Es entsteht bei anliegendem Pflugbaumvorderteil am Anschlag 27 ein Kräftedreieck, das die Zugkraft $P_z$ des Pfluges gut auf den Pflugkopf 3 überträgt, so daß die auf Querbiegung beanspruchte Wendewelle 4 im gefährdeten Übergangsbereich zum Pflugkopf 3 entlastet wird (Fig. 4). Zur Drehung des Pflugbaumes 1 ist der Hydraulikzylinder 22 auf Zugkraft zu beaufschlagen, und der Pflugbaum 1 schwenkt längs zur Fahrtrichtung (Fig. 5). Nachdem das Führungsmittelteil 26 kreisförmig um die Wendewelle 4 ausgebildet ist, kann sich der Pflugbaum 1 um die Wendewellenachse drehen, wenn der Schwerpunkt S über diese Wendewellenachse hinausgeschwenkt ist. Der Pflugbaum 1 dreht aufgrund seiner Eigenenergie langsam und weich nach unten (Fig. 7). Nach Überschreiten der Totpunktlage ist der Hydraulikzylinder 22 auf Druckkraft umzuschalten, so daß sich die Rolle 24 (in Fig. 6 als $24_2$, gekennzeichnet) gegen das Füh- rungsmittelteil 26, dessen Krümmungsmittelpunkt $K_{r26}$ über dem Wendewellenmittelpunkt liegt, abstützt und somit durch die Gegenkraft $P_{24}$, ein Drehmoment auf den Pflugbaum 1 entsteht und dieser deshalb weiterdreht. Mit zunehmender Drehung erhöht sich zwar das Schwerpunktmoment, das Antriebsmoment jedoch gleichsam. Erreicht die Rolle 24 ($24_3$) die gegen- überliegende Öffnung der Führung 25b, ist die Drehung zum Großteil beendet, und der Pflugbaum 1 schwenkt in seine neue Arbeitsstellung. Die Drehung in entgegengesetzter Richtung erfolgt sinngemäß.

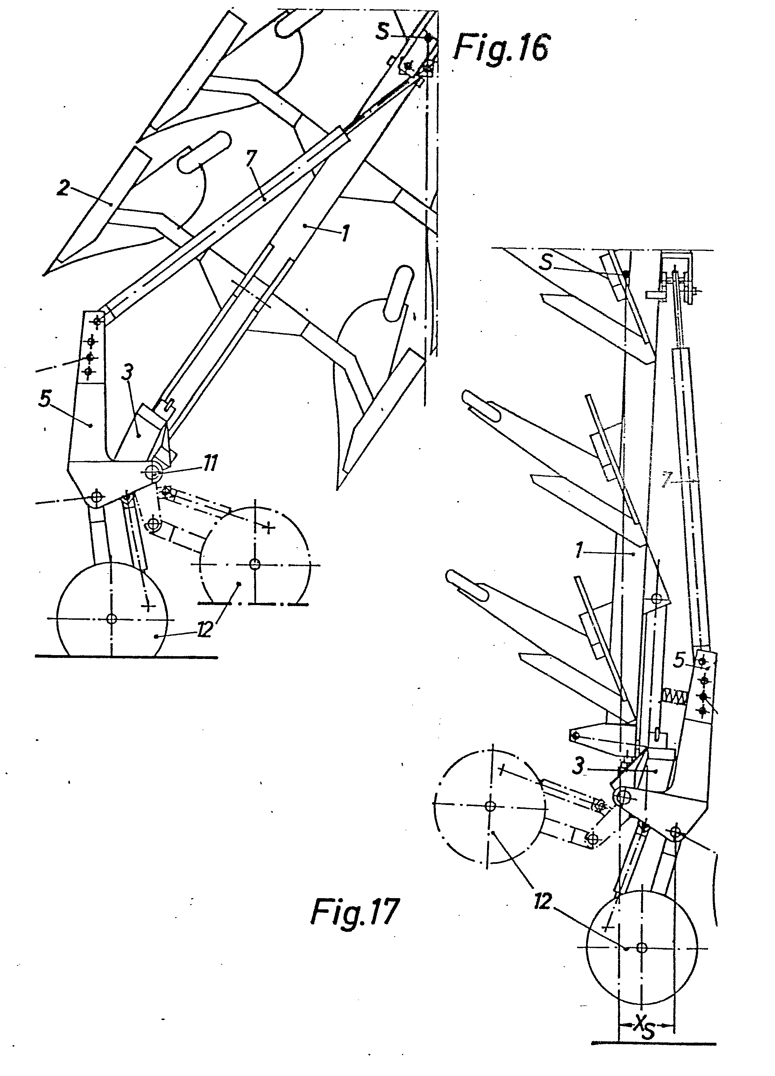

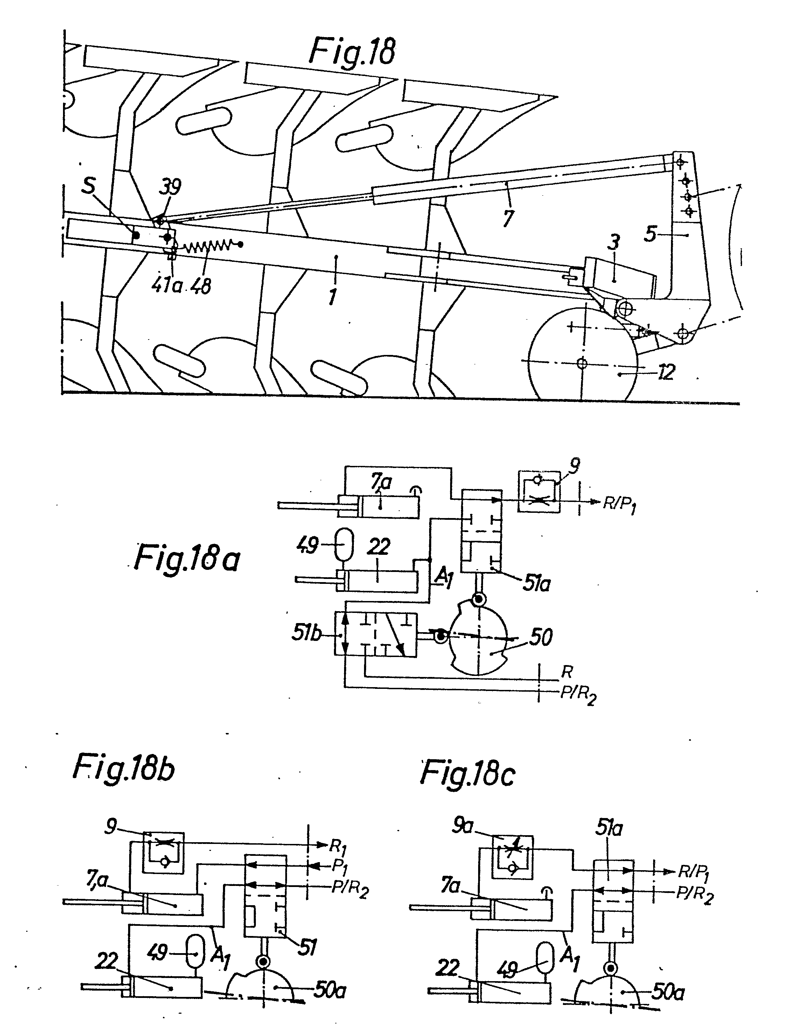

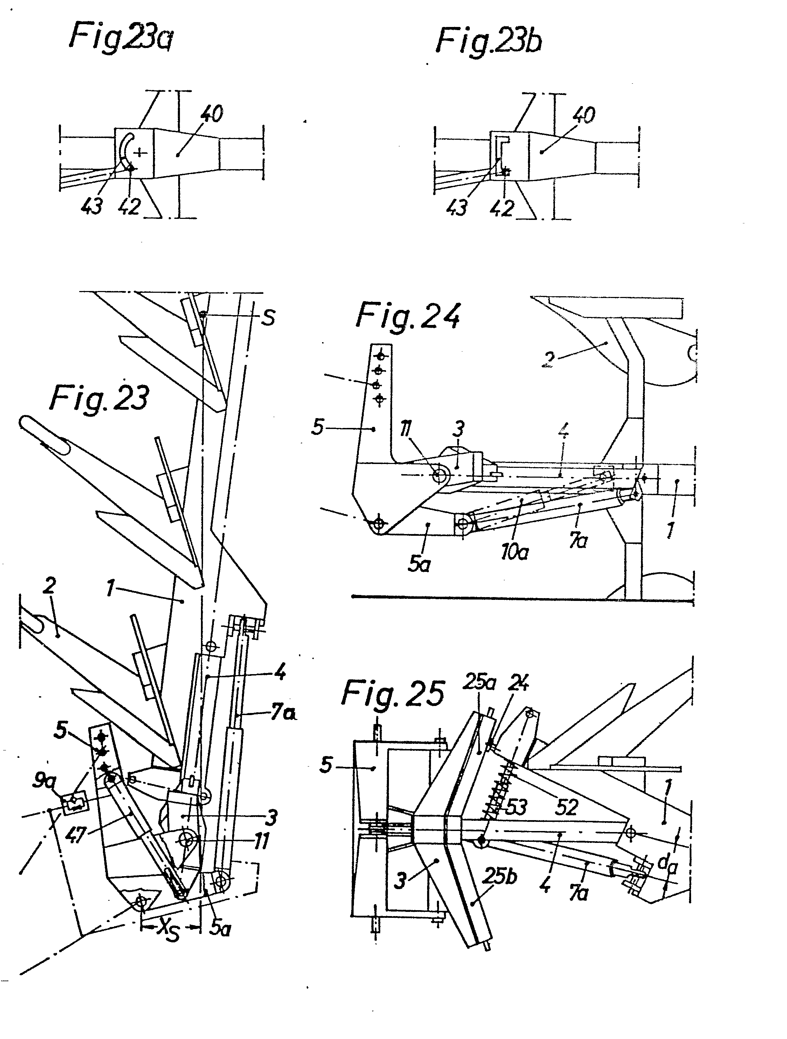

Anstatt der zweiten Zuleitung zu dem Hydraulikzylinder 22 kann ein Hydro-Speicher 49 (Fig. 16a, b, c und Fig. 18a, b, c) angeschlossen werden. Bei kleineren Pflügen bzw. kleinerem Kraftbedarf kann eine Feder 52 (Fig. 25) dem Hydraulikzylinder 22 parallelgeschaltet werden. Damit ist ein einfachwirkender Hydraulikzylinder ausreichend.

Zur Einstellung der Furchenneigung sind die äußeren Führungsteile 25a und 25b im Anschlußbereich des Führungsmittelteiles 26 schwenkbar gelagert. Der Übergang vom Führungsmittelteil 26 auf die äußeren Führungsteile 25a und b bleibt damit immer gleich. In Fig. 6 ist das rechte Führungsteil 25a auf waagrechte Pflugkörperstellung und das linke Führungsteil 25b auf maximale Querneigung eingestellt.

Zum besseren Vergleich des Schwenk-Drehvorganges zwischen den Stellungen des Schwerpunktes S und dem Pflugbaumvorderteil ist in Fig. 6a der Index an den Schwerpunktsbezeichnungen $S_0$, $S_1$, $S_2$, $S_3$, $S_4$ mit denen der Rollenbezeichnung in Fig. 6 - $24_0$, $24_1$, $24_2$, $24_3$ und $24_4$ identisch. Des weiteren ist in Fig. 6a der Ablauf des Pflugbaumschwerpunktes S bei normalem starren Pflugbaum der Schwenk-Drehung gegenübergestellt. Die deutlich erkennbaren Energieunterschiede stellen den Vorteil des Schwenk-Drehsystems klar heraus.

B) Schwenk-Drehsystem ohne handbetätigter Umschaltung der Hydraulik

Das Schwenk-Drehverfahren ist wie unter A beschrieben identisch, lediglich der Antrieb erfolgt über ein flexibles Zugmittel 30, das am vorderen Pflugbaum 1 mittels eines beweglichen Mitnehmers 29 befestigt ist. Die anderen Enden des flexiblen Zugmittels 30 werden außen an den Führungsteilen 25a und b über Umlenkrollen 31a und b in den Pflugkopf 3 umgeleitet und umschlingen dort das Rollenpaar 32a und b, das am Ende des Hydraulikzylinders 22a gelagert ist, und sind in entgegengesetzter Richtung am Pflugkopf 3 befestigt.

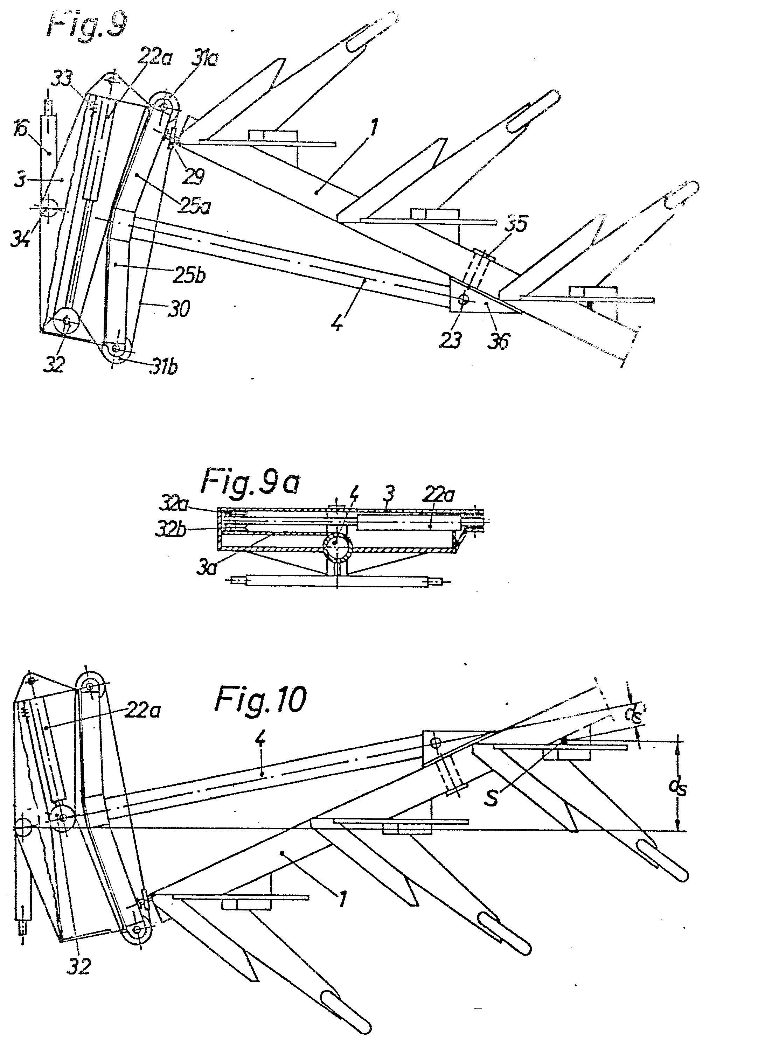

Dieses Antriebsverfahren des Schwenk-Drehsystems eignet sich besonders für Aufsatteldrehpflüge. Deshalb ist am folgenden Beispiel in Fig. 9, 9a, 10, 11, 11a, 13 und 14 der Wendevorgang eines Aufsatteldrehpfluges beschrieben. Nachdem es für Aufsatteldrehpflüge zweckmäßiger ist, den Pflugbaum 1 über die Wendewelle 4 zu drehen, verlaufen die Führungsteile 25a, b und 26 oberhalb der Wendewelle 4.

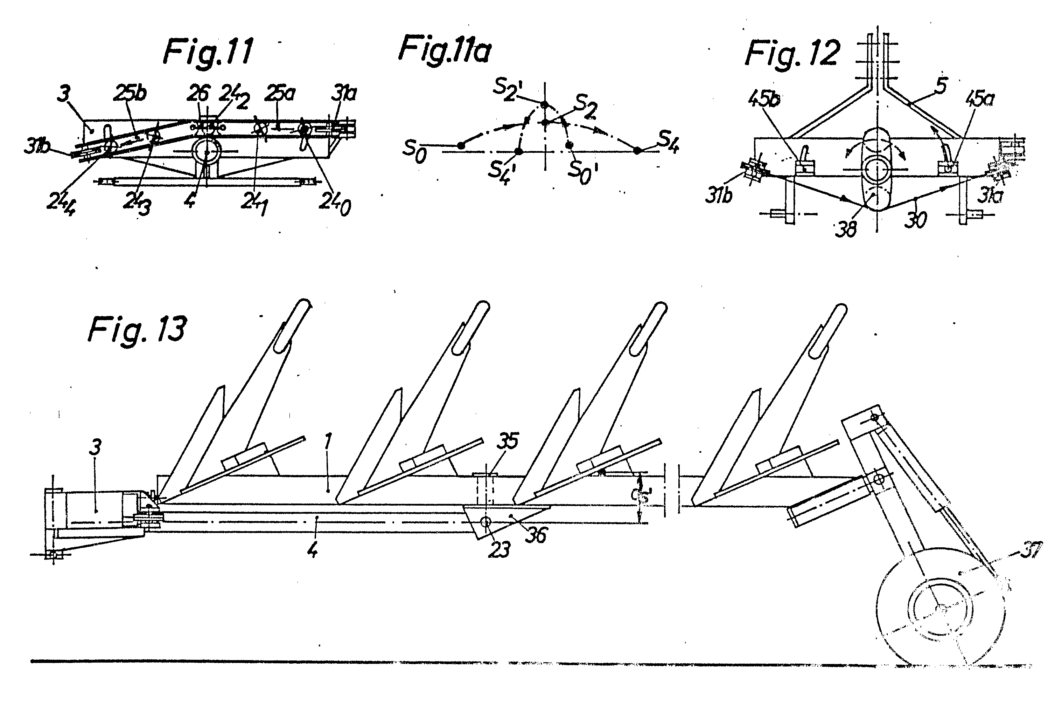

Das Vorderteil des Pflugbaumes 1 wird über das flexible Zugmittel 30 mit konstanter Geschwindigkeit von einem Ende der Führung 25a zum anderen Ende der Führung 25b in einem durchgehenden Hubweg des Hydraulikzylinders 22a gezogen. Durch die Koppelung des Pflugbaumes 1 an der Wendewelle 4 über das Lager 23 erfolgt eine von der Schwenkbewegung abhängige Drehbewegung des Pflugbaumes 1 um die Wendewelle 4. Wie in Fig. 11 dargestellt, ist in der Rolle 24 die Drehlage der Pflugkörper 2, die stets eine Senkrechte zu der Wendewelle 4 bildet, als Strich symbolisiert. Der Ablauf der Rolle 24 in Fig. 11 - $24_0$, $24_1$, $24_2$, $24_3$, $24_4$ - zeigt die Änderung der Drehlage, die sich zu Beginn und am Ende der Schwenkbewegung nur gering ändert, aber im Mittelteil ihre maximale Drehgeschwindigkeit erreicht. Der Drehvorgang ist deshalb besonders weich und ruckfrei. Aufgrund der geringen Drehlagenänderung am Anfang und Ende der Schwenkbewegung des Pflugbaumes 1 ist über das Drehwerk gleichzeitig eine Schnittbreitenkorrektur des ersten Pflugkörpers 2 erreichbar, ohne daß sich die Querneigung der Pflugkörper 2 wesentlich ändert.

In Fig. 11 sind die maximalen Verstellmöglichkeiten der äusseren Führungsteile 25a und b dargestellt. Diese Einstellmöglichkeit ist erforderlich, damit die Pflugkörper 2 bei jeder Arbeitstiefe senkrecht zur Pflugsohle stehen.

In Fig. 11a ist der Schwerpunktverlauf S des Pflugbaumes 1 dargestellt, wobei die Indexbezeichnung wieder identisch mit der Rolle 24 (Fig. 11) ist. Die Schwerpunktbezeichnung $S_{0'}$, $S_{2'}$ und $S_{4'}$ bezieht sich auf die Wendewelle 4 und $S_0$, $S_2$ und $S_4$ auf den Erdboden. Letzteres ist maßgebend, welche Energie während des Drehvorganges frei wird bzw. aufgewendet werden muß. Der flache Schwerpunktverlauf bedeutet eine geringe Drehantriebskraft und schont somit das gesamte Drehwerk.

Das Rollenpaar 32a und b am Hydraulikzylinder 22a wirkt im Prinzip wie ein Flaschenzug. Es ist seitlich frei beweglich, um einseitige Verspannungen des flexiblen Zugmittels 30 zu vermeiden. Zusätzlich ist noch eine Ausgleichsfeder 33 vorgesehen.

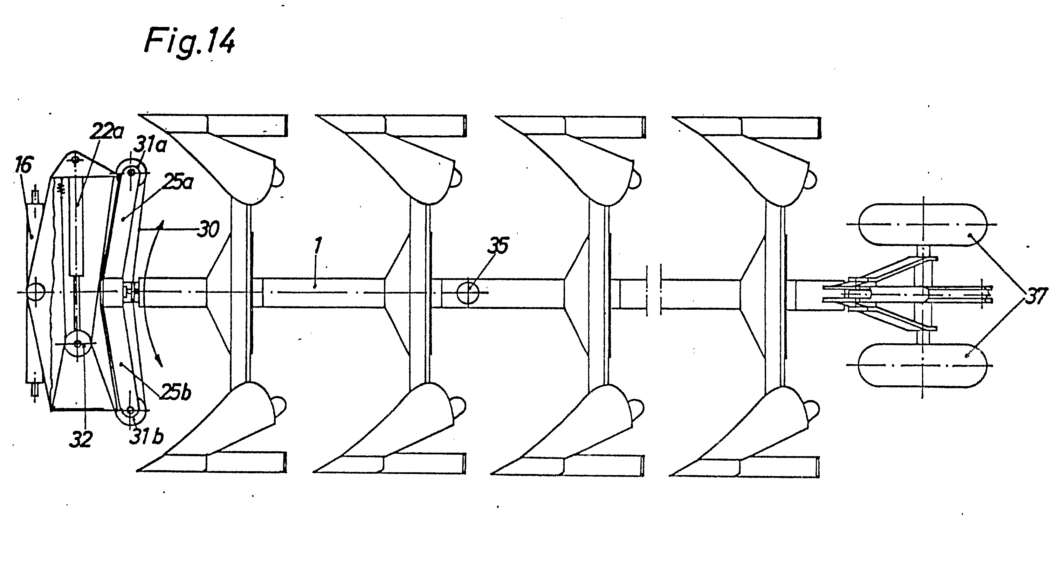

Dieses Schwenk-Drehsystem ermöglicht bei Aufsatteldrehpflügen noch eine zusätzliche Lenkhilfe während des Transports, wenn die äußeren Führungsteile 25a und b waagrecht gestellt werden, die Drehwelle 4 in Drehrichtung gesperrt und das zweite Schwenklager 35 freigegeben wird (Fig. 13 und 14).

Der Pflugbaum 1 ist jetzt waagrecht um das Schwenklager 35 und in den Führungsteilen 25a, b und 26 rollend zum Pflugkopf 3 parallel schwenkbar. Zur Lenkung kann entweder der Hydraulikzylinder 22a in Schwimmstellung gebracht werden und eine mechanische Lenkverbindung (nicht dargestellt) zwischen Zugachse 16 und Pflugbaum 1, oder eine hydraulische Lenkverbindung (nicht dargestellt) über einen an der Zugachse 16 angelenkten Geberzylinder und dem Hydraulikzylinder 22a als Servozylinder hergestellt werden, oder der Hydraulikzylinder 22a bleibt mit dem schlepperseitigen Steuerventil verbunden und die Lenkung erfolgt unabhängig vom Lenkeinschlag des Schleppers als Nachlenkung.

Für Anbaudrehpflüge ist neben dem beschriebenen Schwenk-Drehsystem noch eine preisgünstige Version für Standardpflüge möglich, indem anstatt der Schwenk-Drehvorrichtung für das flexible Zugmittel 30 auf der Drehwelle 4 ein Abrollelement 38 drehfest befestigt ist und Dreharretierung 45a und b für den Pflugbaum 1 vorhanden sind. Durch die flaschenzugartige Wirkung des Hydraulikzylinders 22a wird auch hier der Pflugbaum 1 von einer Arbeitsstellung in die andere ohne hydraulische Umschaltung gedreht. Ein Abrollelement 38 mit unterschiedlichen Durchmessern verbessert nicht nur die Drehkinematik, sondern auch die Kraftübertragung auf das Drehwerk. Die Dreharretierung 45a und b ist auf einfache Art und Weise über den Hydraulikzylinder 22a und dem flexiblen Zugmittel 30 automatisch zu entriegeln, indem die am Pflugkopf 3 befestigten Enden des flexiblen Zugmittels 30 umgelenkt werden und entsprechend der Drehrichtung an der Dreharretierung 45a oder b entweder auf der gleichen oder entgegengesetzten Pflugkopfseite in Entriegelungszugrichtung befestigt sind (nicht dargestellt). Eine Rückholfeder 60 (Fig. 20) hält die Dreharretierung 45a und b in Verriegelungsstellung.

Zur Einleitung des Drehvorganges ist der Hydraulikzylinder 22a in die zu drehende Richtung zu bewegen. Über die Umlenkung des flexiblen Zugmittels 30 wird zunächst die Dreharretierung 45a oder b gelöst und dann die Drehung eingeleitet. Erreicht der Pflugbaum 1 die Endlage der neuen Arbeitsstellung, verriegelt sich der Pflugbaum 1 selbständig, da diese Dreharretierung 45a oder b am Lostrumm des flexiblen Zugmittels 30 ist.

Mit der automatischen Verriegelung wird der Pflugbaum 1 sicher in seiner Arbeitsstellung gehalten, und der Hydraulikzylinder 22a bleibt drucklos.

C) Abstützvorrichtung

Für Standardpflüge eignet sich die mechanische Abstützvorrichtung 18, a; 19, a; 20, a; 21, a, die entsprechend dem Verwendungszweck entweder zwischen Pflugbock 5 und Drehwelle 4 oder Pflugbock 5 und Pflugbaum 1 und entsprechend der Drehrichtung des Pflugbaumes 1 entweder oberhalb oder unterhalb der Drehwelle 4 angelenkt sein kann. In jedem Fall wird die Drehwelle 4 und der Übergangsbereich auf den Pflugkopf 3 oder Pflugbock 5 entlastet. Mit den vorgesehenen Spannschlössern 18, a; 19 und a ist die gewünschte Entlastungskraft einstellbar. Für konventionelle Drehsysteme eignen sich die Abstützvorrichtungen nach 18 und 18a. Wird die Abstützvorrichtung 21 und a am Pflugbaum 1 angelenkt und ist kein Kippausgleich zwischen Pflugkopf 3 und Pflugbock 5 vorhanden, ist eine Ausgleichsfeder 20 oder 20a erforderlich, da unterschiedliche Schwenk-Drehradien auftreten. Diese sind gegenüber einem konventionellen Drehsystem jedoch relativ klein (Fig. 7). Eine Abstützvorrichtung mittels eines Hydraulikzylinders 7, a; 10 und a läßt sich beispielsweise kombinieren als Unterstützung des Drehwerkes, als alleiniger Drehwerksantrieb und zusätzlich als Kippeinrichtung bzw. Bodenausgleich des Pflugbaumes 1.

Durch die asymmetrische Anlenkung des Hydraulikzylinders 7 oder a am Pflugbaum 1 entsteht eine Drehantriebsunterstützung $d_a$, siehe Fig. 5. In Verbindung mit einer Dreh-Hilfseinrichtung kann, falls erforderlich, die Totpunktlage nach halbem Drehvorgang überwunden werden, so daß der Pflugbaum 1 nicht mehr in seine bisherige Arbeitsstellung zurückdrehen kann. Der Hydraulikzylinder 7 oder 7a ist am Pflugbaum 1 über einen Zwischenhebel 39, dessen Lagerachse am Pflugbaum 1 symmetrisch und quer zur Zugrichtung des Hydraulikzylinders 7 oder 7a ist, schwenkbar angelenkt. Der Zwischenhebel 39 liegt entsprechend dem Drehvorgang an den Anschlägen 41a oder 41b an, so daß der Hydraulikzylinder 7 oder 7a zum Pflugbaum 1 asymmetrisch angelenkt ist. Nach halber Drehung des Pflugbaumes 1, wenn der Pflugbaumschwerpunkt S in der Totpunktlage ist, verbleibt ein Restantriebsmoment $d_a$ (Fig. 8), das die Totpunktlage sicher überwindet. Nach beendigter Drehung und während des Einsetzens des Pfluges wird im Hydraulikzylinder 7 oder 7a die Kraft zu Null, und die Feder 48 schwenkt den Zwischenhebel 39 in die Symmetrieachse des Pflugbaumes 1. Durch das Eigengewicht des Hydraulikzylinders 7 oder 7a senkt sich der Zwischenhebel 39 aus seiner waagrechten Lage weiter, so daß nach erneuter Belastung des Hydraulikzylinders 7 oder 7a der Zwischenhebel 39 gegen den Anschlag 41a entweder gezogen (Fig. 18) oder gedrückt wird (Anlenkung nach Fig. 24). Der Pflug kann jetzt in die entgegengesetzte Richtung erneut gedreht werden.

Die gleiche Wirkung der Dreh-Hilfseinrichtung wird erreicht, wenn der Hydraulikzylinderanlenkbolzen 42 in einem kreisförmigen oder u-förmigen Langloch 43 geführt und der Hydraulikzylinder 7 oder 7a durch eine Feder 48 entsprechend der Anlenkungsart des Hydraulikzylinders 7 oder 7a entweder herausgezogen oder zusammengeschoben wird - siehe Fig. 8a und 8b oder 23a und 23b.

Bei nicht kippbarem Pflugbaum 1 und beispielsweise unter der Drehwelle 4 angelenktem Hydraulikzylinder 7a fällt nach der Druckentlastung des Hydraulikzylinders 7a und Entriegelung der Pflugbaumschwerpunkt S aufgrund seiner Eigenenergie nach unten. Dadurch wird der Hydraulikzylinder 7a eingeschoben, und nach Umschaltung auf Druck dreht der Pflugbaum 1 weiter. Eine Dreh-Hilfseinrichtung kann auch hier das Zurückdrehen des Pflugbaumes 1 in seine alte Arbeitsstellung verhindern. Bleibt der Hydraulikzylinder 7a während der Arbeit unter Druck, wird die Drehwelle 4 auf Längsbiegung entlastet.

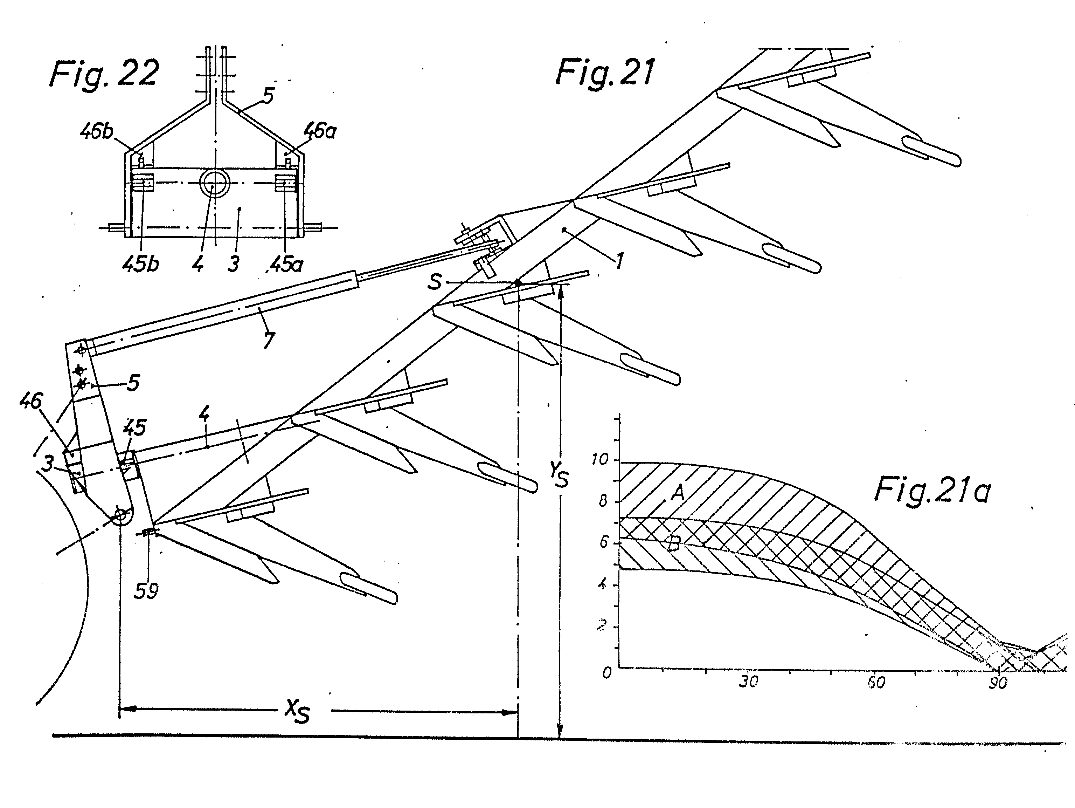

Der gleiche Drehantrieb ist bei der Anlenkung des Hydraulikzylinders 7 über der Wendewelle 4 erreichbar, mit dem Unterschied, daß der Pflugbaumschwerpunkt S zuerst hochgedreht wird und sich dann durch seine Eigenenergie absenkt (nicht abgebildet, jedoch ähnlich Fig. 21).

Als Kombination der Abstützvorrichtung zwischen Drehantrieb - ohne Schwenkmöglichkeit - und Kippeinrichtung mit einem einzigen Hydraulikzylinder 7 sei ein Beispiel nach Fig. 19 bis 20 beschrieben.

Der Pflugbaum 1 mit Drehwelle 4 und Pflugkopf 3 ist entweder über ein eigenes Kipplager 11 oder der Zugachse 16 kippbar. Ein auf Zug beanspruchter Hydraulikzylinder 7 ist oberhalb der Wendewelle 4 einerseits am Pflugbock 5 und andererseits am Pflugbaum 1, möglichst mit einer Dreh-Hilfseinrichtung kombiniert, angelenkt. Die Zugkraft im Hydraulikzylinder 7 wird von dem Kippmoment des Schwerpunktes S bestimmt. Diese Zugkraft ist maßgebend für das Antriebs-Drehmoment zur Drehwelle 4. Bei entsprechend ausgewogener Anlenkung des Hydraulikzylinders 7 wird das Antriebs-Drehmoment $d_a$ größer sein als das Schwerpunkts-Drehmoment $d_s$ (Fig. 4). Nach Lösen der Dreharretierung 45 dreht der Pflugbaumschwerpunkt S nach oben, gleichzeitig kippt der Pflugbaum 1 im Lager 16 entsprechend

dem Radius $d_a$ zurück. Obwohl der Schwerpunkt S nach oben gezogen wird, ist es wegen dem Zurückkippen des Pflugbaumes 1 im Prinzip eine Falldrehung, und die Förderleistung der Schlepperhydraulik kann trotz gleichzeitigem Ölzulauf im Hydraulikzylinder 7 keinen direkten Einfluß auf den Drehvorgang haben. Der Pflugbaum 1 ist in der halb gedrehten Stellung jetzt in die senkrechte Lage kippbar, so daß sich für den Schlepper günstigere Achslastverteilungen ergeben. Der zweite Teil der Drehung erfolgt nach dem Abkippen des Pflugbaumes 1 in die Arbeitslage, indem der Pflugkopf 3 an einem am Pflugbock 5 befestigten Anschlag 46 zum Anliegen kommt. Das hiermit aufgehobene Kippmoment läßt den über der Wendewelle 4 liegenden Schwerpunkt S um die Wendewelle 4 drehend absinken, bis der Zapfen 59 in die Dreharretierung 45 einrastet. Der Pflug ist einsatzbereit.

Fig. 21a zeigt schematisch den Ablauf des Dreh-Antriebsmomentes (schraffiert), aufgetragen über dem Drehwinkel, von Beginn der Drehung bis über die Totpunktlage hinaus. Das dargestellte Dreh-Antriebsmoment ist die Differenz zwischen dem Drehmoment durch den Hydraulikzylinder 7 und dem Schwerpunktmoment S. Die Fläche A ist die Drehung bei waagrechter Kipplage des Pflugbaumes 1 und die Fläche B bei einem Kippwinkel von ca. 45°. Diese unterschiedlichen Werte der Antriebsmomente haben den Vorteil, daß sie einerseits relativ klein ausgelegt werden können und andererseits bei einer asymmetrischen Schwerpunktsverlagerung, z.B. durch einseitig hängengebliebenes Erdreich an den Pflugkörpern 2, oder durch das Gelände hervorgerufene Querneigung des Pfluges, dieser durch ein Tieferkippen trotzdem sicher dreht. Die Drehgeschwindigkeit des Pflugbaumes 1 kann somit durch seine Kippstellung bestimmt werden. Damit der Kipp-Dreh-Kipp-Vorgang in einem Arbeitsgang durchführbar ist und die Bedienungsperson sich voll auf das Wenden des Schleppers konzentrieren kann, erfolgt die Drehauslösung des Pflugbaumes 1 automatisch (Fig. 20). Erreicht der Pflugkopf 3 einen vorbestimmten Kippwinkel, wird die Drehwerkarretierung 45 durch einen Umlenkhebel 44, der an einem am Pflugbock 5 befestigten Anschlag 46 anliegt oder vorbeistreift, mit zunehmendem Kippweg zurückgeschoben und entriegelt. Die Verriegelung erfolgt über eine Auflaufschräge an der Arretierung 45 und wird durch den Arretierungszapfen 59 zurückgeschoben. Für lange und schwere Anbaudrehpflüge ist ein zweiter Hydraulikzylinder 47 vorgesehen, der zwischen Pflugbock 5 und Pflugkopf 3 angelenkt und hydraulisch mit dem Hydraulikzylinder 7 verbunden ist. Wird der Hub des zweiten Hydraulikzylinders 47 auf ca. den halben Kippweg des Pflugbaumes 1 begrenzt und die Anlenkung für den weiteren Kippweg in einem Langloch geführt und ein Drosselrückschlagventil 9a vorgeschaltet, erfüllt er die gleiche Aufgabe wie der starre Anschlag 46, mit dem Unterschied, daß die Kipp-Dreh-Kipp-Bewegung nicht mehr hintereinander, sondern parallel erfolgt. Die Drehgeschwindigkeit ist durch die Drossel im Drosselrückschlagventil 9a einstellbar. Das Diagramm in Fig. 19a stellt die Kippmomentverteilung der beiden Hydraulikzylinder 7 und 47 schematisch dar. Unter der Bezeichnung "Drehung 1" ist die erste Drehhälfte während des Hochkippens und unter "Drehung 2" die zweite Drehhälfte während des Abkippens des Pflugbaumes 1 zu verstehen. Der zweite Hydraulikzylinder 47 hat nicht nur die Aufgabe, die Drehung zu unterstützen bzw. zu ermöglichen, sondern entlastet den Hydraulikzylinder 7 in der höher beanspruchten ersten Kipphälfte des Pflugbaumes 1. Dies wirkt sich besonders vorteilhaft für den Kippausgleich des eingesetzten Pfluges bei welligem Boden aus.

Eine Variante zu der oben beschriebenen Kombination ist in Fig. 23 bis 24 dargestellt: Der Hydraulikzylinder 7a ist hier unterhalb der Drehwelle 4 am Pflugbock 5a und Pflugbaum 1 angelenkt. Da der Pflugbaum 1 mit den vorderen Pflugscharen 2 über die Drehwelle 4 gedreht werden muß, damit der Hydraulikzylinder 7a unter der Drehwelle 4 durchdrehen kann und der Pflugbaum 1 nach halber Drehung nicht nach oben kippbar ist (siehe Fig. 27), ist als Kombination das Schwenk-Drehsystem gewählt. In Verbindung mit dem zweiten Hydraulikzylinder 47
kann der Hydraulikzylinder 22 (Fig. 4) eingespart und dafür
eine Druckfeder 52 eingesetzt werden.

Bei hydraulischer Verbindung der Hydraulikzylinder 47 und 7a
wird die Schwenk-Drehbewegung erst eingeleitet, wenn der Hub
des Hydraulikzylinders 47 zu Ende ist - nach ca. halbem
Kippweg des Pflugbaumes 1. Der Druck im Hydraulikzylinder 7a
steigt an, und der Pflugbaum 1 schwenkt zunächst entgegen
dem Druck der Feder 52 ein und dreht dann in die Totpunktlage - halbe Drehung. Der Schwerpunkt S wird dabei über die
Drehwelle 4 gedreht. Danach drückt der Hydraulikzylinder 7a
den Pflugbaum 1 in die nahezu senkrechte Lage, während die
Anlenkung des Hydraulikzylinders 47 von ihrem Anschlag abhebt und in einem Langloch geführt wird. Die zweite Hälfte
der Drehung erfolgt nach Absenkung des Pflugbaumes 1, wenn
die Anlenkung des Hydraulikzylinders 47 wieder zum Anliegen
kommt. Ein dem Hydraulikzylinder 47 vorgeschaltetes Drossel-
Rückschlagventil bewirkt, daß der Hydraulikzylinder 7a nahezu drucklos wird und die Federkraft 52, unterstützt von dem
über der Drehwelle 4 liegenden Schwerpunkt S, überwiegt und
den Pflugbaum 1 weiterdreht und ausschwenkt.

Ein der Feder 52 gleichgeschalteter Dämpfungszylinder 53,
der nur auf Druckkraft beansprucht dämpft, ermöglicht in der
ersten Schwenk-Drehhälfte einen kontinuierlichen Übergang
zwischen der Kipp- und der Drehbewegung. Eine ähnliche Wirkung ist zu erreichen, wenn die Kräte und Anlenkungen der
Feder 52, der Hydraulikzylinder 47 und 7a  entsprechend ausgewogen sind bzw. die Größe des Pfluges dies zuläßt.

Hydraulische Schaltkombination

Bei der Kombination zwischen Kippeinrichtung und Schwenk-
Drehvorrichtung soll einerseits die erfindungsgemäße Schnittbreitenkorrektur des ersten Pflugkörpers 2 unabhängig von der
Kippeinrichtung durchführbar und andererseits beim Hochkippen des Pflugbaumes 1 in die senkrechte Lage bzw. Abkippen in die Arbeitsstellung in einem Bedienungsvorgang gleichzeitig die notwendige Schwenk-Drehbewegung möglich sein. Dazu seien drei Beispiele der hydraulischen Schaltkombination Fig. 16a, b und c bzw. Fig. 18a, b und c anhand der Kipp- und Schwenk-Drehkombination nach Fig. 15, 16, 17 und 18 beschrieben.

Der Pflugbaum 1 wird zunächst durch den Hydraulikzylinder 7 in eine Schräglage gekippt, daß die Scharspitze des oberen, ersten Pflugkörpers 2 den Schlepper noch nicht beschädigen kann. Danach ist die Um- oder Zuschaltung des Schwenk-Drehwerkes bis zur halben Drehung erforderlich. Die Dreh-Schwenkbewegung für die zweite Drehhälfte erfolgt nach dem Abkippen des Pflugbaumes 1 in gleicher oder ähnlicher Kippstellung.

Beispiel 1 (Fig. 16a bzw. 18a)

Hydraulikanschluß schlepperseitig mit zwei einfachwirkenden Steuerventilen und ein Rücklauf; Umschaltung der Hydraulik über zwei Zweiwegeventile:

Der Kippzylinder 7 ist auf Zug beaufschlagt und die Druckkraftseite entlüftet. Der Schwenk-Drehzylinder 22 ist an der Zugkraftseite an einem Hydro-Speicher 49 und die Druckkraftseite über die Arbeitsleitung $A_1$ mit den Zweiwegeventilen 51a und b verbunden. In Arbeitsstellung des Pfluges ist der Kippzylinder 7 über das Zweiwegeventil 51a und der Leitung $P/R_1$ mit dem schlepperseitigen einfachwirkenden Steuerventil und der Schwenk-Drehzylinder 22 über das Zweiwegeventil 51b und der Leitung $P/R_2$ mit dem zweiten schlepperseitigen einfachwirkenden Steuerventil verbunden. Damit kann jeder Hydraulikzylinder 7 und 22 getrennt gesteuert werden. Das am Kippzylinder 7 angeschlossene schlepperseitige Steuerventil wird auf Zulauf geschaltet, während das zweite schlepperseitige Steuerventil in Sperrstellung steht. Eine mit der Kippbewegung des Pflugkopfes 3 gekoppelten Schaltkulisse 50 schaltet die Zweiwegeventile.

0019275

Der Pflugbaum 1 wird hochgekippt, und nach der Umschaltung zur Schwenk-Drehbewegung steht das Zweiwegeventil 51a noch bzw. wieder in der normalen Arbeitsstellung,und der Kippvorgang geht weiter. Das Zweiwegeventil 51b dagegen hat umgeschaltet und gibt die mit dem Schwenk-Drehzylinder 22 verbundene Arbeitsleitung $A_1$ mit dem Rücklauf R frei. Der Schwenk-Drehzylinder 22 wird durch den Hydro-Speicher 49 eingezogen, und der Pflugbaum 1 dreht bis zur Totpunktlage und ist somit bis in die senkrechte Lage kippbar (Fig. 17).

Nach dem Öffnen des am Kippzylinder 7 angeschlossenen schlepperseitigen Steuerventils senkt sich der Pflugbaum 1 wieder, wobei ein zwischengeschaltetes Drosselrückschlagventil ein zu rasches Absinken verhindert. Nach ca. halb abgekipptem Pflugbaum 1 werden beide Zweiwegeventile 51a und 51b über die gekoppelte Schaltkulisse 50 umgeschaltet. Der Schwenk-Drehzylinder 22 ist jetzt über die Arbeitsleitung $A_1$ in dem Zweiwegeventil 51a in Schwimmstellung mit der Leitung P/$R_1$ - Schlepper mit Kippzylinder - verbunden und im Zweiwegeventil 51b in Sperrstellung, da das zweite schlepperseitige Steuerventil geschlossen ist. Nachdem in der Leitung P/$R_1$ das Drosselrückschlagventil 9 dem Zweiwegeventil 51a vorgeschaltet ist, wird der durch den Kippzylinder 7 erzeugte Druck in den Schwenk-Drehzylinder 22 umgeleitet, der gegen den Druck des Hydrospeichers 49 ausfährt und den Pflugbaum in seine Arbeitsstellung drückt. Die Senkgeschwindigkeit des Pflugbaumes 1 nimmt nach dem Drehvorgang wieder zu, weil wieder der volle Druck von dem Kippzylinder 7 auf das Drosselrückschlagventil 9 kommt. Nach weiterer Absenkung des Pflugbaumes 1 wird das Zweiwegeventil 51a wieder in die Arbeitsstellung zurückgeschaltet, und beide Zylinder sind wieder getrennt steuerbar.

Beispiel 2 (Fig. 16b bzw. 18b)

Hydraulikanschluß schlepperseitig mit einem doppeltwirkenden und einem einfachwirkenden Steuerventil; Umschaltung
über ein Zweiwegeventil:

Der Kippzylinder 7 ist auf der Zugkraftseite direkt mit einem Anschluß des schlepperseitigen, doppeltwirkenden Steuerventils verbunden, während die Druckkraftseite über das
Zweiwegeventil 51c an dem zweiten Anschluß des genannten
Schlepperventils angeschlossen ist. Dieser Anschluß hat für
die Arbeitsstellung des Pfluges den Vorteil, daß bei Druckkraftbelastung des Kippzylinders 7 die Zugwiderstandskraft
$P_z$ unter die Kippachse 11 verlagert werden kann.

Der Anschluß des Schwenk-Drehzylinders 22 ist wie im Beispiel 1 beschrieben, mit dem Unterschied, daß dessen Anschlüsse an den Hydro-Speicher 49 und der Arbeitsleitung $A_1$
vertauscht sind.

Nach ca. halb hochgekipptem Pflugbaum 1 schaltet das Zweiwegeventil 51c um, und der Rücklauf des Kippzylinders 7 ist
über die Arbeitsleitung $A_1$ in dem Zweiwegeventil 51c in Umlaufstellung mit der Zugkraftseite des Schwenk-Drehzylinders
22 verbunden. Die Schwenk-Drehbewegung erfolgt jetzt synchron
der Kippbewegung.

Durch Öffnen der Leitung $P_1$ als Rücklauf $R_1$ senkt sich der
Pflugbaum 1 und wird gleichzeitig durch den Hydro-Speicher 49
ebenfalls synchron zur Kippbewegung in die Arbeitsstellung
gedrückt. Die Rückschaltung des Zweiwegeventils 51c erfolgt
in der gleichen Kipplage wie beim Aufwärtskippen des Pflugbaumes 1. Beide Hydraulikzylinder 7 und 22 sind wieder getrennt steuerbar.

Das Drosselrückschlagventil 9 ist für diese hydraulische
Schaltkombination nicht erforderlich, aber für den Ausgleich
des Kipp-Schwungmomentes verwendbar.

Beispiel 3 (Fig. 16c bzw. 18c)

Hydraulikanschluß schlepperseitig mit zwei einfachwirkenden Steuerventilen; Umschaltung der Hydraulik über ein Zweigeventil:

Der Anschluß des Kippzylinders 7 in Arbeitsstellung des Pfluges ist wie im Beispiel 1, mit dem Unterschied, daß das Drosselrückschlagventil 9a dem Kippzylinder 7 und dem Zweiwegeventil 51d zwischengeschaltet ist. Der Schwenk-Drehzylinder 22 ist wie im Beispiel 2 angeschlossen. Nachdem das Zweiwegeventil 51d nach ca. halb hochgekipptem Pflugbaum 1 über die Schaltkulisse 50a umgeschaltet hat, ist die mit dem Schwenk-Drehzylinder 22 verbundene Arbeitsleitung $A_1$ im Zweiwegeventil 51d in Schwimmstellung mit der Zuleitung $P/R_1$ zum Kippzylinder 7. Die Widerstandskraft im Schwenk-Drehzylinder 22 ist erwartungsgemäß kleiner als im Kippzylinder 7, so daß das Rückschlagventil im Drosselrückschlagventil 9a schließt und der Pflugbaum 1 nahezu stehen bleibt, während der Ölstrom von $P/R_1$ in den Schwenk-Drehzylinder 22 umgelenkt wird und dieser den Pflugbaum 1 in die Totpunktlage dreht. Durch den ansteigenden Druck in dem Hydro-Speicher 49 während des ersten Drehvorganges steigt auch der Druck in der Arbeitsleitung $A_1$ und somit in der Zuleitung zum Kippzylinder 7, so daß der Pflugbaum 1 gleichzeitig wieder langsam nach oben weiterkippt.

Nach Öffnen der Leitung $P/R_1$ als Rücklauf beginnt sich der Pflugbaum 1 wieder zu senken. Durch das Drosselrückschlagventil 9a, das dem Zweiwegeventil 51d vorgeschaltet ist, wird die Rücklaufleitung $P/R_1$ und somit die Arbeitsleitung $A_1$ nahezu drucklos, so daß der Hydro-Speicher 49 den Pflugbaum 1 gleichzeitig in seine Arbeitsstellung weiterdrehen kann. Es ist bei dieser Schaltkombination eine relativ genaue Drosseleinstellung im Drosselrückschlagventil 9a erforderlich, damit die Drehung des Pflugbaumes 1 vor dem Umschalten des Zweiwegeventils 51d in die Arbeitsstellung des Pflugbaumes 1 abgeschlossen ist bzw. die Drehung gegenüber dem Kippweg nicht zu schnell geht, um Beschädigungen am Schlepper zu vermeiden. Aus diesem Grund ist es zweckmäßig, die Drossel einstellbar auszubilden.

Bei allen drei hydraulischen Schaltkombinationen kann an dem Schwenk-Drehzylinder 22 anstatt des Hydro-Speichers 49 ein direkter Anschluß am Schlepper erfolgen. Hierzu ist allerdings schlepperseitig ein doppeltwirkendes Steuerventil notwendig.

Die für die hydraulische Schaltkombination erforderlichen Drosselrückschlagventile 9, a sind gleichzeitig als Ausgleich des Kippmomentes wirksam.

Kippeinrichtung, Kippausgleich:

Die Kippeinrichtung des Pflugbaumes 1 kann entweder nach bekannter Art über einen Hydraulikzylinder 58, der anstatt des Oberlenkers eingesetzt ist, oder über einen als Abstützvorrichtung verwendeten Hydraulikzylinder 7, a oder 10, a oder 47 in Verbindung mit einem Kipplager 11 oder 16 zwischen Pflugbock 5 und Pflugkopf 3 erreicht werden.

Durch die Kippeinrichtung kann der Anbaupflug am Feldende schräg ausgefahren und wieder schräg eingesetzt werden (Fig. 15 und 18). Dies hat den Vorteil, daß speziell bei längeren Anbaupflügen durch das einzelne Aus- und Einfahren der Pflugschare der Furchenanschnitt gleichmäßiger und somit das Pflügen des Vorfeldes leichter und sauberer wird. Das schräge Einsetzen des Anbaupfluges ermöglicht außerdem ein rasches Eindringen der Pflugkörper 2 auf ihre Sollarbeitstiefe, da durch das schräge Anstellen der Pflugkörper 2 die Einzugskraft wesentlich erhöht wird, was sich bei schweren Böden besonders vorteilhaft auswirkt.

Die Kippeinrichtung ist gleichzeitig als Kippausgleich des eingesetzten Anbaupfluges bei welligen Böden verwendbar. Al-

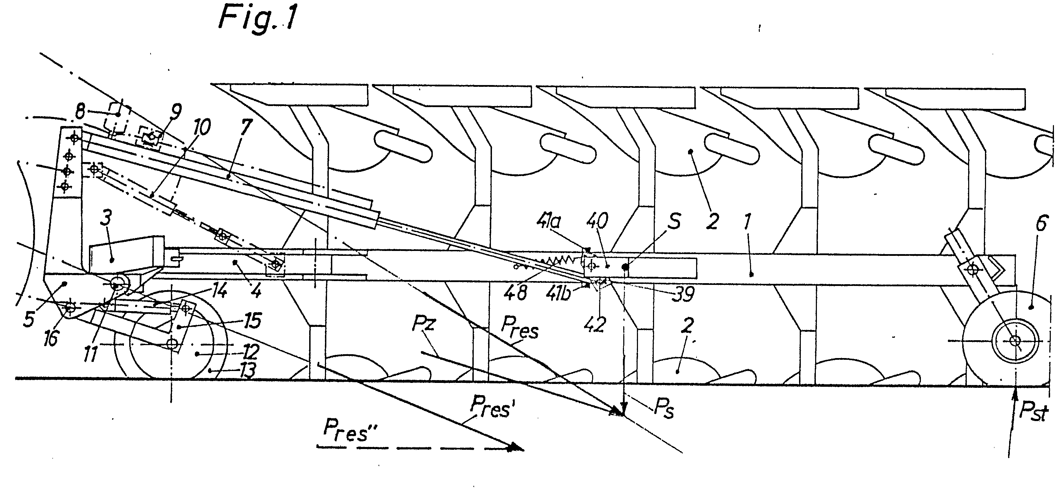

lerdings muß der Hydraulikzylinder 7, a;/47 oder 58 bei direktem Anschluß an den Schlepper ständig über dessen Steuerventil nachreguliert werden, außer es wird in Schwimmstellung gefahren, was zur Folge hat, daß die Zugwiderstandskraft $P_{res}$, stets durch das Kipplager 11 oder 16 verläuft (Fig. 1). Die auf den Schlepper zu übertragende Tragkraft wird dabei allerdings relativ klein und wirkt sich bei kleinen oder mittellangen Anbaupflügen nachteilig aus, weil die Zugkraftübertragung des Schleppers auf den Boden nicht optimal ausgenutzt werden kann.

Dieser Nachteil wird erfindungsgemäß ausgeschaltet, wenn den Kippzylindern 7, a; 10, a; 47 oder 58 ein Hydrospeicher 8 vorgeschaltet wird. Dadurch ist die auf den Schlepper zu übertragende Tragkraft vom Maximum bis zum Minimum exakt einstellbar. Das Maximum wird erreicht, wenn der Hydrospeicher 8 über das schlepperseitige Steuerventil soweit vorgespannt wird, bis die Auflagekraft $P_{St}$ am Stützrad 6 den Wert 0 erreicht. Das Minimum ist dann notwendig, wenn der Anbaupflug über Steinplatten gezogen wird, die im Niveau so hoch liegen, daß nahezu keine natürliche Seitenführung des Anbaupfluges vorhanden ist. Bei der geringsten Bodenunebenheit wird deshalb ein Anbaupflug ohne Kippausgleich entweder vorne oder hinten etwas herausgekippt, so daß die Seitenführungsanlagen an den Pflugkörpern 2 dem Seitendruck nicht mehr standhalten und der Pflug in das ungepflügte Land rutscht. Eine saubere Pflugarbeit ist aus diesem Grund nicht mehr möglich. Die gleiche Gefahr des seitlichen Abrutschens ist auch beim Schälpflügen gegeben. Deshalb ist eine gute Anpassung an Bodenunebenheiten speziell bei längeren Anbaupflügen vorteilhaft bzw. notwendig, um solche Pflugarbeiten überhaupt durchführen zu können. Neben der Tragkrafteinstellung ist über den Hydro-Speicher 8 gleichzeitig der Kippausgleich möglich, da das durch die Kippbewegung des Pflugbaumes 1 verdrängte Öl der Hydraulikzylinder 7, a; 10, a; 47 oder 58 von dem Hydro-Speicher 8 aufgenommen bzw. abgegeben wird. Da-

mit wird die Wirkung und somit der Vorteil von Aufsattelpflügen erreicht, mit dem zusätzlichen Vorteil, daß die auf
den Schlepper zu übertragende Tragkraft während der Pflugarbeit eingestellt werden kann. Der Kippausgleich vermeidet
außerdem ein Aufbäumen oder Eingraben der Räder des Schleppers, da der Anbaupflug durch die Hubhydraulik des Schleppers
nur vorne angehoben wird, so daß die Übertragungskraft auf
den Schlepper nahezu konstant bleibt.

Das Drosselrückschlagventil 9 bzw. 9a in Verbindung mit dem
Hydrospeicher 8 und der Kippeinrichtung bzw. Kippausgleich
verhindert, daß beim Überfahren von Bodenunebenheiten
Schwungmomente des ausgehobenen Anbaupfluges auf den Schlepper übertragen werden.

D) Front-Hilfsstützrad

Lange und schwere Anbaupflüge können häufig nicht angebaut
werden, weil die Vorderachse des Schleppers zu stark entlastet bzw. die Hinterachse überbelastet wird. Selbst bei
eingebauter Kippeinrichtung muß der Anbaupflug nach dem Ausfahren aus der Furche erst in die günstigere Schwerpunktlage
hochgekippt werden, so daß in solchen Fällen Aufsattelpflüge
verwendet werden müssen.

Das Front-Hilfsstützrad eignet sich besonders in Verbindung
mit einer Kippeinrichtung des Pflugbaumes 1 und wird deshalb
nachfolgend am Beispiel nach Fig. 1, 15, 16, 17, 18 und 29
beschrieben.

Das Laufrad 12 ist über die Stützradstrebe 15 in nachlaufender Stellung entweder am Pflugbock 5 oder Pflugkopf 3 geführt.
Der abstützende Hydraulikzylinder 14 ist am Pflugbock 5 oder
Pflugkopf 3 so angelenkt, daß seine Wirkungslinie bei nach
hinten geschwenktem Front-Hilfsstützrad, wie dies bei eingesetztem Anbaupflug der Fall ist, im Bereich der Stützradanlenkung 16 vorbeiläuft. Die Abstützkraft des Front-Hilfsstützrades wird dadurch relativ klein, so daß die bei einem Anbaupflug vorteilhafte Übertragung der Tragkraft auf den Schlepper erhalten bleibt.

Über Verstellen oder Umstecken der Anlenkung des Hydraulikzylinders 14 läßt sich diese kleingehaltene Abstützkraft des Laufrades 12 jeder Pflugtiefe gut anpassen (nicht dargestellt). In Verbindung mit einem Kippausgleich kann durch einen Tiefenanschlag am Front-Hilfsstützrad die Sollpflugtiefe besser eingehalten werden, als über die Hubhydraulik des Schleppers, nachdem das Laufrad 12 unmittelbar am ersten Pflugkörper 2 läuft. Es kann aber auch ohne Tiefenanschlag gepflügt werden, da sich das Front-Hilfsstützrad den Unebenheiten anpassen kann, wenn der Hydraulikzylinder 14 entweder an einem Hydro-Speicher angeschlossen oder direkt mit dem Aushubzylinder des Schleppers verbunden ist. Letzteres hat den Vorteil, daß Unebenheiten mit Differentialwirkung ausgeglichen werden, da beispielsweise eine Bodenerhöhung am Laufrad 12 das im Hydraulikzylinder 14 verdrängte Öl gleichzeitig in den Aushubzylinder des Schleppers gedrückt wird.

Ausgehoben wird der Anbaupflug mit Kippeinrichtung am Feldende zuerst vorne über die Schlepperhubhydraulik. Bei Verbindung des Hydraulikzylinders 14 mit dem Schlepperhubzylinder schwenkt das Stützrad 12 deshalb automatisch nach vorne. Dadurch wird der Hebelarm h größer und die Stützkraft ebenso, so daß jetzt ein Großteil der Tragkraft des Schleppers auf das Front-Hilfsstützrad übertragen wird (Fig. 15). Der Pflugbaum 1 ist somit leicht kippbar, ohne daß der Schlepper überbelastet bzw. vorne aufsteigen kann (Fig. 16). Steht der Pflugbaum 1 in nahezu senkrechter Lage, wird die erforderliche Hubkraft so gering, daß der Anbaupflug von dem Schlepper frei getragen werden kann. Damit ist das Front-Hilfsstützrad beim nachfolgenden Wendevorgang des Schleppers nicht hinderlich (Fig. 17).

Zum Einsetzen des Anbaupfluges in die Furche ist es zweckmäßig, zunächst den Anbaupflug über die Schlepperhydraulik, dessen Steuerventil bei Lageregelung in die Stellung der Sollpflugtiefe zu bringen ist, abzusenken und dann unverzüglich nach unten zu kippen. Dadurch wird das bereits beschriebene günstige, schräge Einfahren des Pflugbaumes 1 in die Furche erreicht (Fig. 18).

Wird das Front-Hilfsstützrad am kippbaren Pflugkopf 3 angelenkt, hat es den Vorteil, daß es mit der Kippbewegung des Pflugbaumes 1 nach hinten mitkippt und deshalb bei ausgehobenem Anbaupflug die Bodenfreiheit größer wird, was für Schlepper mit geringer Aushubhöhe der Hubhydraulik notwendig ist. Bei Transportstellung des Anbaupfluges kann dieser dann trotz Front-Hilfsstützrad, wenn es entsprechend hochgestellt ist, vollkommen abgesenkt werden, so daß die Hubhydraulik des Schleppers drucklos ist (Fig. 29).

Gleichzeitig ist das Front-Hilfsstützrad als Träger eines Scheibenseches 13a, b verwendbar. Dies ist speziell bei Anbaudrehpflügen besonders vorteilhaft, weil die Anbringung eines Scheibenseches aus Platzgründen häufig Schwierigkeiten bereitet. Das an dem Laufrad 12a, b befestigte Scheibensech 13a, b ist durch axiales Verstellen des Laufrades 12a, b an die Schnittbreite des ersten Pflugkörpers 2 angleichbar. Bei Drehpflügen sind wegen der doppelseitigen Pflugrichtung zwei Scheibenseche 13a und 13b notwendig, da diese nicht mit dem Pflugbaum 1 gedreht werden können.

Die Befestigung des Scheibenseches 13a, b am Front-Hilfsstützrad hat bei Schwimmstellung des Hydraulikzylinders 14 noch den Vorteil, daß das Front-Hilfsstützrad gleichzeitig als Hindernissicherung für das Scheibensech 13a, b dient.

E) Klappeinrichtung des Pflugbaumes

Für den Transport kann der hochgekippte Pflugbaum 1, speziell bei längeren Anbaupflügen (Fig. 30) die vorgeschriebene Maximalhöhe von Fahrzeugen auf öffentlichen Straßen überschreiten. Aus diesem Grund ist erfindungsgemäß eine Klappeinrichtung des Pflugbaumes 1 vorgesehen.

Beispiel 1 (Fig. 28)

Wird eine Schwenk-Drehkombination verwendet, eignet sich für den Pflugbaum das Klappen in der Mitte über eine Schwenkachse 54, ohne den Pflugbaum 1 zusätzlich drehen zu müssen. Dazu ist zunächst die Drehwelle 4 zu arretieren und der Pflugbaum 1 über den Hydraulikzylinder 22 parallel zur Wendewelle 4 zu schwenken und falls erforderlich das Stützrad 6 um 90° abzuklappen. Nachdem der Pflugbaum 1 über den Kippzylinder 7 in die Waagrechte gekippt ist, kann der hintere Teil des Pflugbaumes 1a nach Lösen der Verschraubung oder Arretierung ohne Gefahr um die Schwenkachse 54 um ca. 180° nach vorne geklappt und mittels einer Arretierung 55a festgestellt werden. Durch zusätzliches Hochkippen mit dem Kippzylinder 7 um ca. 45° läßt sich der Pflugbaumschwerpunkt S nochmals um ca. die Hälfte ($X_s'$) in Richtung Schlepperachse rücken.

Beispiel 2 (Fig. 29)

Schwenk-Drehkombination mit zusätzlicher Halbdrehung des Pflugbaumes.
Der Pflugbaum 1a wird in waagrechter Lage zuerst um die Schwenkachse 54 zu einem spitzen Winkel geschwenkt und mit einer Strebe 55 arretiert. Danach mit dem Hydraulikzylinder 22 eingeschwenkt, dann um die Hälfte gedreht und mit dem Kippzylinder 7 so weit hochgekippt, wie es die Bauweise des Schleppers 57 zuläßt. Diese Transportstellung hat noch den Vorteil, daß das Hubgestänge des Schleppers 57 ganz abgesenkt werden kann und somit die Hubhydraulik drucklos wird.

0019275

Beispiel 3 (nicht abgebildet)

Schwenk-Drehkombination mit zusätzlicher Halbdrehung des Pflugbaumes 1 bei Anlenkung des Kippzylinders 7a unter der Drehwelle 4 nach Fig. 23.

Es ist im Prinzip wie bei Beispiel 2 zu verfahren. Diese Transportstellung unterscheidet sich zu den von Fig. 29, indem der hintere Pflugbaumteil (1a) nach hinten weist und deshalb nicht in den Schlepperraum ragt. Auch bei diesem Beispiel kann der gesamte Anbaupflug bis in die Endlage des Schlepperhubgestänges abgesenkt werden.

Beispiel 4 (Fig. 30)

Kombination ohne Schwenkeinrichtung nach Fig. 19, 21.

Ist eine Transportstellung wie in Fig. 29 dargestellt nicht möglich, weil Pflugteile einer relativ weit hinten liegenden Fahrzeugkabine berühren könnten, bietet sich eine Transportklappstellung nach Fig. 30 an. Es wird hier zwar nicht die günstige Höhenabmessung wie bei den anderen Beispielen erreicht, liegt aber in der Regel unter der vorgeschriebenen Maximalhöhe, ohne auf die Länge des Anbaupfluges Rücksicht nehmen zu müssen. Sind Engstellen zu durchfahren, kann der Pflugbaum 1 ohne umfangreiches Umrüsten nach hinten abgekippt werden.

Die Erfindung und deren Kombinationen wurden in erster Linie anhand von Drehpflügen beschrieben. Ein Teil ist jedoch auch an Beetpflügen (Einwegpflüge) mit den gleichen Vorteilen anwendbar.

So ist beispielsweise durch das Verschwenken des Pflugbaumes (1) mittels eines Schwenkzylinders (22) eine Schnittbreitenkorrektur des ersten Pflugkörpers (2) möglich und eine gleich günstige Transportstellung wie in Fig. 28 dargestellt. In Verbindung mit einer Kippeinrichtung ist der Pflugbaum (1) außerdem in die senkrechte Lage kippbar, da bei Beetpflügen die oberen Pflugkörper (2) fehlen.

Des weiteren ist der Kippausgleich und das Front-Hilfsstützrad an Beetpflügen gleichsam anwendbar.

0019275

- 1 -

Patentansprüche:

1. Verfahren zur Durchführung des Drehvorganges bei Drehpflügen, die über ein Vordergestell mit einem Schlepper verbunden sind und der Pflugbaum mittels eines Hydraulikzylinders um eine mit dem Vordergestell verbundenen Wendewelle
von einer Arbeitsstellung in die andere gedreht wird, dadurch gekennzeichnet, daß die Drehung des Schwerpunktes (S)
um die Wendewelle (4) in Abhängigkeit einer annähernd horizontalen Schwenkbewegung des Pflugbaumes (1) erfolgt.

2. Vorrichtung zur Durchführung des Verfahrens nach Anspruch
1, dadurch gekennzeichnet, daß der Pflugbaum (1) am Ende der
Wendewelle (4) schwenkbar gelagert und am vorderen Ende über
Rollenmittel (24) oder Gleitelemente am Pflugkopf (3) befestigtem Führungselement (25a, b, 26) verschiebbar ist und
dessen Führungsrichtung zur Wendewelle (4) entweder unmittelbar unterhalb oder oberhalb vorbei verläuft.

3. Drehantriebsvorrichtung für Drehpflüge, die mittels eines
Hydraulikzylinders den Pflugbaum um eine mit dem Vordergestell verbundenen Wendewelle von einer Arbeitsstellung in
die andere in einem durchgehenden Hubweg des Hydraulikzylinders dreht, dadurch gekennzeichnet, daß der Hydraulikzylinder
(22a) einerseits am Pflugkopf (3) oder Pflugbock (5) und andererseits an einem Rollenmittelpaar (32a, b) mit einem
flexiblen Zugmittel (30) angelenkt ist und dessen unbewegliche Enden in entgegengesetzter Richtung am Pflugkopf (3)
oder Pflugbock (5) befestigt sind, und das Rollenmittelpaar
(32a, b) gegenläufig umschlingt und in entgegengesetzter
Richtung über Umlenkrollenmittel (31a, b) entweder an einem
Abrollelement (38), das drehfest mit dem Pflugbaum (1) oder
Drehwelle (4) verbunden ist, oder an einem am vorderen Ende
des Pflugbaumes (1) drehbar gelagerten Mitnehmer (29) befestigt ist.

0019275

4. Drehantriebsvorrichtung nach Anspruch 3, dadurch gekennzeichnet, daß das Abrollelement (38) unterschiedliche Durchmesser aufweist, die zu Beginn und am Ende der Drehung des Pflugbaumes (1) ihr Maximum und bei halber Drehung ihr Minimum erreichen.

5. Drehantriebsvorrichtung mit automatischer Drehwerksentriegelung nach Anspruch 3 oder 4, dadurch gekennzeichnet, daß die unbeweglichen Enden des flexiblen Zugmittels (30) entsprechend der gewählten Drehrichtung des Pflugbaumes (1) mit der Drehwerksarretierung (45a, b) in Entriegelungszugrichtung verbunden sind.

6. Hilfslenkeinrichtung für Aufsatteldrehpflüge in Transportstellung, dadurch gekennzeichnet, daß ein senkrecht zum Pflugbaum (1) stehendes Schwenklager (35) vorgesehen und mit einer am Ende der Wendewelle (4) befestigten Konsole (36) verbunden ist.

7. Hilfslenkeinrichtung nach Anspruch 6, dadurch gekennzeichnet, daß entweder der Pflugbaum (1) über ein Lenkgestänge mit der Zugachse (16) oder der Hydraulikzylinder (22) mit einem am Gelenkpunkt (34) zwischengelenktem Geberzylinder hydraulisch verbunden ist.

8. Abstützvorrichtung zur Entlastung des Pflugvorderteiles an Pflügen, vorzugsweise an Anbaudrehpflügen, dadurch gekennzeichnet, daß mindestens ein Verbindungselement (7, a; 10, a; 18, a; 19, a; 20, a; 21, a) zwischen dem Pflugbock (5) oder/ und dem Pflugkopf (3) und entweder der Drehwelle (4) oder dem Pflugbaum (1) verbunden oder angelenkt ist.

9. Abstützvorrichtung nach Anspruch 8 mit Kippausgleich des Pflugbaumes, dadurch gekennzeichnet, daß ein Kipplager (11) waagrecht und quer zur Drehwellenachse zwischen dem Pflugblock (5) und dem Pflugkopf (3) vorgesehen ist.

0019275

10. Abstützvorrichtung nach Anspruch 9, dadurch gekennzeichnet, daß ein hydraulischer Kippzylinder (7, a; 10, a; 47) entweder zwischen dem Pflugbock (5) und der Drehwelle (4) oder dem Pflugbaum (1), oder zwischen dem Pflugbock (5) und Pflugkopf (3) angelenkt ist.

11. Abstützvorrichtung nach einem der Ansprüche 8 - 10, dadurch gekennzeichnet, daß von der Kippbewegung des Pflugkopfes (3) und Pflugbaumes (1) oder des hydraulischen Kippzylinders (7, a) oder von dem Hubweg des Kippzylinders (7, a) abhängig in Aufwärtsrichtung des Pflugbaumes (1) nach einem gewissen Kipp- oder Hubweg über ein mechanisch oder hydraulisch zu betätigender Auslösemechanismus (44) eine Dreharretierung (45) des Pflugbaumes (1) freigegeben wird und in Abwärtsrichtung des Pflugbaumes (1) nach einem gewissen Kipp- oder Hubweg sich der Pflugkopf (3) an einem Anschlag (46) oder einem zweiten hydraulischen Kippzylinder (47) abstützt, und daß ein Drosselrückschlagventil (9) dem zweiten Kippzylinder (47) vorgeschaltet und der Zuleitung vom Schlepper zum Kippzylinder (7, a) parallelgeschaltet vorgesehen ist.

12. Abstützvorrichtung nach Anspruch 11 als Dreh-Hilfseinrichtung zur Überwindung der Totpunktlage nach dem halben Wendevorgang, dadurch gekennzeichnet, daß der Gelenkbolzen (42) das Verbindungselement (7, a; 19, a; 20, a; 21, a) an dem zu der Wendewellenlängsachse symmetrischen Anlenkpunkt des Pflugbaumes (1) entweder über einen Zwischenhebel (39) drehbar gekoppelt ist und entsprechend seiner Lage an den Anschlägen (41a) oder (41b) zur Anlage kommt, oder in einem Langloch (43), das entweder kreisförmig oder an dessen Enden mit querlaufenden Auskragungen ausgebildet ist, geführt ist.

0019275

13. Abstützvorrichtung nach Anspruch 12, dadurch gekennzeichnet, daß eine Feder (48) einerseits im Bereich der Längssymmetrieachse des Pflugbaumes (1) und andererseits entweder am Zwischenhebel (39) oder an dem im Langloch (43) geführten Gelenkbolzen (42) angreift.

14. Kippeinrichtung mit oder ohne Abstützvorrichtung an Pflügen, dadurch gekennzeichnet, daß dem Kippzylinder (7, a; 10, a; 47; 58) ein Hydrospeicher (8) oder/und ein Drosselrückschlagventil (9) vorgeschaltet ist.

15. Front-Hilfsstützrad an Pflügen, vorzugsweise an Anbaupflügen mit Kippeinrichtung des Pflugbaumes, dadurch gekennzeichnet, daß ein Laufrad (12a, b) in nachlaufender Stellung am Pflugvorderteil (3, 5) angelenkt ist und ein Hydro-Zylinder (14) oder Federbein so angelenkt ist, daß die Wirkungslinie des Hydro-Zylinders (14) oder Federbeins bei eingesetztem Pflug unmittelbar im Bereich des Anlenkpunktes (16) der Stützradstrebe (15) vorbeiläuft und bei ausgehobenem Pflug durch das ausschwenkende Laufrad (12a, b) sich der Hebelarm dieser Wirkungslinie vergrößert.

16. Front-Hilfsstützrad nach Anspruch 15, dadurch gekennzeichnet, daß der Hydro-Zylinder (14) hydraulisch in Schwimmstellung mit dem Schlepperhubzylinder des Geräteaushubgestänges verbunden ist.

17. Front-Hilfsstützrad nach Anspruch 15 oder 16, dadurch gekennzeichnet, daß an dem Laufrad (12a, b) mindestens ein als Scheibensech (13a, b) wirkender Ring befestigt ist.

18. Klappeinrichtung des Pflugbaumes an Anbaupflügen, vorzugsweise an Anbaupflügen mit verschwenk- oder kippbarem Pflugbaum, dadurch gekennzeichnet, daß der Pflugbaum (1) über eine Schwenkachse (54), die parallel zu den Pflugkörpern (2) angeordnet ist, seitlich ausschwenkbar und mittels einer Arretiereinrichtung (55, a) feststellbar ist.

Fig.1

Fig.2

Fig.3

Fig.4

Fig. 5

Fig. 6a

Fig. 6

**Fig. 7**

7

4

3

5

1

S

d

S

**Fig. 8a**

43    40

42

**Fig. 8b**

43    40

42

**Fig. 8**

3

5

1    41a

S

7    41b    39

d

Fig.9

Fig.9a

Fig.10

Fig.12

Fig.11a

Fig.11

Fig.13

Fig.14

# Fig.15

# Fig.16a

# Fig.16b

# Fig.16c

Fig.16

Fig.17

## Fig.18

## Fig.18a

## Fig.18b

## Fig.18c

Fig. 20

Fig. 19

Fig. 19a

*Fig. 22*

*Fig. 21*

*Fig. 21a*

Fig.23a

Fig.23b

Fig.23

Fig.24

Fig.25

**Fig.26**

5
45
4
41a 1
7a
39 41b

**Fig.27**

2
5
1
45
7a

**Fig.28**

5
3
24
6 7
1
55a
1a
54
S'
S
$x_{S'}$
$x_S$

Fig.29

Fig. 30